(19) Europäisches Patentamt
European Patent Office
Office européen des brevets

(11) **EP 4 064 171 A1**

(12) **EUROPEAN PATENT APPLICATION**
published in accordance with Art. 153(4) EPC

(43) Date of publication:
**28.09.2022 Bulletin 2022/39**

(21) Application number: **19953280.5**

(22) Date of filing: **20.11.2019**

(51) International Patent Classification (IPC):
***G06Q 50/06*** *(2012.01)*

(52) Cooperative Patent Classification (CPC):
**G06Q 10/06; G06Q 50/06**

(86) International application number:
**PCT/JP2019/045449**

(87) International publication number:
**WO 2021/100148 (27.05.2021 Gazette 2021/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **MITSUBISHI ELECTRIC CORPORATION**
**Chiyoda-ku**
**Tokyo 100-8310 (JP)**

(72) Inventors:
• **IMAI Ken**
**Tokyo 100-8310 (JP)**
• **UENO Yohei**
**Tokyo 100-8310 (JP)**
• **IWATA Masafumi**
**Tokyo 100-8310 (JP)**

(74) Representative: **Sajda, Wolf E.**
**Meissner Bolte Patentanwälte**
**Rechtsanwälte Partnerschaft mbB**
**Postfach 86 06 24**
**81633 München (DE)**

(54) **OPERATIONAL KNOW-HOW ESTIMATION DEVICE AND OPERATIONAL KNOW-HOW ESTIMATION METHOD**

(57) An object of the present invention is to reduce the workload of an operator to attach classification information necessary for estimating operational know-how of a water plant to time-series data of measured values and control values. An operational know-how estimation device (1001) includes a data acquisition unit (101) configured to acquire target time-series data being time-series data of measured values regarding a state of a water plant and control values regarding operation manipulation, a classification information attachment unit (102, 106) configured to classify the target time-series data for each section by a clustering algorithm and attach the classification information to the sections of the target time-series data, a know-how estimation unit (103) configured to calculate a conditional probability that the measured values and the control values are simultaneously held for each piece of classification information, and estimate operational know-how representing the control values to be set for the measured values based on the conditional probability, and a display control unit (104) configured to create display information that supports state understanding or operation manipulation of the water plant based on the operational know-how and cause a display unit (105) to display the display information.

F I G. 1

## Description

Technical Field

The present invention relates to a technique which analyzes measured values and control values of a plant for waterworks or sewerage (hereinafter referred to as "water supply and sewerage plant") and estimates, from the measured values regarding to the water supply and sewerage plant, operational know-how for determining control values regarding to operation manipulation for the plant.

Background Art

The water supply and sewerage plant is configured and equipped with on-site facilities such as a water purification plant and a sewage treatment plant, as well as a piping network buried in an urban area. In order to efficiently operate the water supply and sewerage plant installed in such a wide area, an operator performs operation manipulation with understanding of the state of the water supply and sewerage plant using a monitoring and control system installed in the center. Under normal circumstances, the operator changes the operating conditions in order to efficiently implement an operation plan, and under abnormal circumstances, the operator performs response operations to minimize the impact on the water supply and sewerage plant. Knowledge of such state understanding and operation manipulation of such a water supply and sewerage plant is referred to as operational know-how.

Conventionally, devices have been developed for the purpose of extracting knowledge such as operational know-how from data. Since the accuracy of knowledge extraction depends on the data used, for the purpose of improving the accuracy of knowledge extraction, there has been a technique in which knowledge extraction is re-performed after adding new data when knowledge with accuracy sufficient enough cannot be extracted from the data stored in the database in advance.

For example, the knowledge extraction device described in Patent Document 1 acquires discriminating knowledge that determines whether data having a plurality of items belongs to which of two classes (e.g., success or failure, presence or absence) by analyzing the same type of data.

At this point, the knowledge extraction device described in Patent Document 1 calculates the accuracy of the discrimination knowledge using the correct answer rate and the like, and if it is insufficient, newly adds the data used for mining. The knowledge extraction device described in Patent Document 1 repeats the process until the accuracy of the discrimination knowledge reaches satisfactory level. The knowledge extraction device described in Patent Document 1 adds an extra item if the accuracy does not still reach the satisfactory level.

Prior Art Documents

Patent Documents

Patent Document 1: Japanese Patent Application Laid-Open JP 2004- 38412 A

Summary

Problem to be Solved by the Invention

The operator of a water supply and sewerage plant performs operation manipulation with understanding of the state of the water supply and sewerage plant based on the measured values regarding the state of the water supply and sewerage plant and the control values regarding the operation manipulation of the water supply and sewerage plant. Operational know-how regarding the state understanding and operation manipulation of the water supply and sewerage plant can be obtained by analyzing the relationship between time-series data of the measured values and the control values. However, in order to perform this analysis, classification information, which is information that patterns of these time-series data were classified, is required to be attached to the time-series data of the measured values and the control values. There has been a problem that the workload of the operator attaching this classification information to the time-series data is high.

The present invention has been made to solve the above-mentioned problem, and an object thereof is to reduce the workload of an operator to attach classification information necessary for estimating operational know-how of a water supply and sewerage plant to time-series data of measured values and control values.

Means to Solve the Problem

According to the present invention, an operational know-how estimation device includes a data acquisition unit configured to acquire target time-series data being time-series data of measured values regarding a state of a water plant and control values regarding operation manipulation, a classification information attachment unit configured to classify the target time-series data for each section by a clustering algorithm and attach the classification information being a classification result to the sections of the target time-series data, a know-how estimation unit configured to calculate a conditional probability that the measured values and the control values are simultaneously established for each classification information, and estimate operational know-how representing the control values to be set for the measured values based on the conditional probability, and a display control unit configured to create display information that supports state understanding or operation manipulation of the water plant based on the operational know-how and cause a display unit to display the display information.

The operational know-how estimation method includes the steps of acquiring target time-series data being time-series data of measured values regarding a state of a water plant and control values regarding operation manipulation, classifying the target time-series data for each section by a clustering algorithm, attaching classification information being a classification result to the sections of the target time-series data, calculating a conditional probability that the measured values and the control values are simultaneously held for each classification information, estimating operational know-how representing the control values to be set for the measured values based on the conditional probability, creating display information that supports state understanding or operation manipulation of the water plant based on the operational know-how, and causing a display unit to display the display information.

Effects of the Invention

According to the present invention, the classification information necessary for estimating the operational know-how of the water plant is added to the time-series data; therefore, the reduction in the workload of the operator who attaches the classification information to the time-series data is ensured. The objects, features, aspects, and advantages of the present invention will become more apparent from the following detailed description and the accompanying drawings.

Brief Description of the Drawings

FIG. 1    A block diagram illustrating a configuration of an operational know-how estimation device according to the first embodiment.

FIG. 2    A graph illustrating time-series data of labeled water level H.

FIG. 3    A graph illustrating time-series data of labeled water supply quantity Q.

FIG. 4    A table illustrating time-series data of water level H and water supply quantity Q and data format of labels.

FIG. 5    A table illustrating the estimation method of operational know-how and the data format of operational know-how.

FIG. 6    A diagram illustrating an operation guidance screen regarding water supply quantity Q.

FIG. 7    A diagram illustrating an abnormality sign monitoring screen regarding water supply quantity Q.

FIG. 8    A block diagram illustrating a configuration of an operational know-how estimation device according to the second embodiment.

FIG. 9    A diagram schematically illustrating an estimation method of a magnitude attribute.

FIG. 10   A scatter diagram of the water level H and the water supply quantity Q.

FIG. 11   A table illustrating conditional probabilities calculated based on the number of data in the section to which each attribute illustrated in FIG. 10 is attached.

FIG. 12   A diagram schematically illustrating an operation guidance screen according to the second embodiment regarding the water supply quantity Q.

FIG. 13   A diagram schematically illustrating an abnormality sign monitoring screen according to the second embodiment regarding the water supply quantity Q.

FIG. 14   A diagram schematically illustrating an educational support information display screen regarding the water supply quantity Q.

FIG. 15   A scatter diagram of the water level H and the water supply quantity Q that distinguishes the data of the normal circumstances and the data of construction period.

FIG. 16   A table illustrating conditional probabilities calculated by a know-how estimation unit of the second embodiment based on the time-series data illustrated as a scatter diagram in FIG. 15.

FIG. 17   A block diagram illustrating a configuration of an operational know-how estimation device according to the third embodiment.

FIG. 18   A diagram illustrating a method in which an event determination unit determines an event occurrence period from the time-series data and attributes thereof.

FIG. 19   A table illustrating conditional probabilities calculated by a know-how estimation unit of the third embodiment based on the time-series data of the water level H and the water supply quantity Q illustrated as a scatter diagram in FIG. 15.

FIG. 20   A block diagram illustrating a configuration of an operational know-how estimation device according to the fourth embodiment.

FIG. 21   A scatter diagram of the water level H and the water supply quantity Q when the estimation accuracy of operational know-how satisfies the estimation accuracy standard.

FIG. 22   A scatter diagram of the water level H and the water supply quantity Q when the estimation accuracy of operational know-how does not satisfy the estimation accuracy standard.

FIG. 23   A scatter diagram of the water level H and the water supply quantity Q that are distinguished into the normal circumstances and the construction period.

FIG. 24   A scatter diagram of a period E and the water supply quantity Q that are distinguished into the normal circumstances and the construction period.

FIG. 25    A scatter diagram of the period E and the reaction tank phosphorus concentration C obtained from response operation unknown data.

FIG. 26    A scatter diagram of the period E and the reaction tank phosphorus concentration C obtained from the response operation unknown data that the periods were distinguished by the response operation data.

FIG. 27    A scatter diagram of a drug injection amount L and the reaction tank phosphorus concentration C.

FIG. 28    A block diagram illustrating a configuration of an operational know-how estimation device according to the fifth embodiment.

FIG. 29    A block diagram illustrating a configuration of an operational know-how estimation device according to the sixth embodiment.

Description of Embodiments

A. First Embodiment

A-1. Configuration

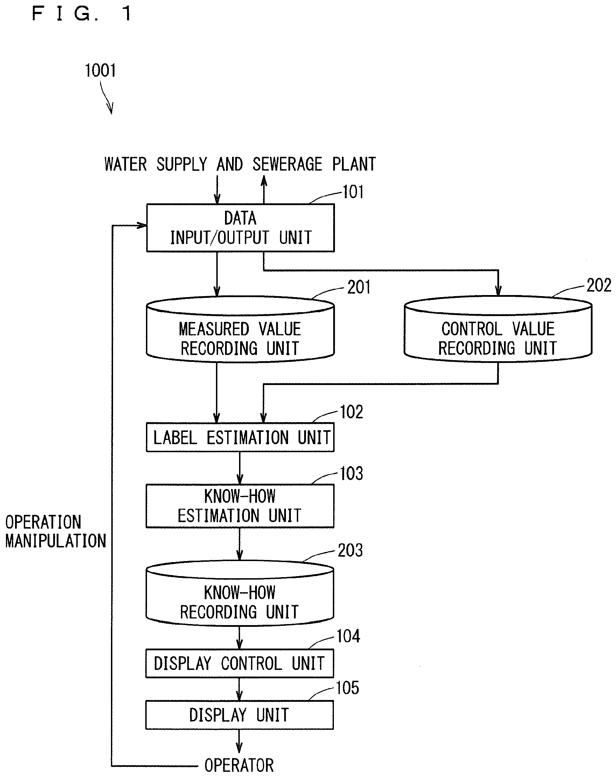

FIG. 1 is a block diagram illustrating a configuration of an operational know-how estimation device 1001 according to the first embodiment. As illustrated in FIG. 1, the operational know-how estimation device 1001 includes a data input/output unit 101, a label estimation unit 102, a know-how estimation unit 103, a display control unit 104, a display unit 105, a measured value recording unit 201, a control value recording unit 202, and an operational know-how recording unit 203.

The operational know-how estimation device 1001 includes an input device, an output device, a central processing unit, or CPU, a primary storage device, a secondary storage device, and, for example, communication equipment for connecting to networks such as intranets.

The data input/output unit 101 in FIG. 1 is implemented by the input device. The data input/output unit 101 may also be implemented by the communication equipment. Also, the label estimation unit 102, the know-how estimation unit 103, and the display control unit 104 in FIG. 1 are implemented by the CPU executing a software program stored in the primary storage device while storing data required for calculation in the secondary storage device or reading data required for calculation from the secondary storage device.

The display unit 105 in FIG. 1 is implemented by the output device. The measured value recording unit 201, the control value recording unit 202, and the operational know-how recording unit 203 in FIG. 1 are implemented by the primary storage device or the secondary storage device.

The data input/output unit 101 collects measured values regarding the state of the water supply and sewerage plant (hereinafter, simply referred to as "water plant") (hereafter, simply referred to as "measured value") and control values regarding operating manipulation (hereinafter, simply referred to as "control value"). The measured value recording unit 201 records the time-series data of the measured values collected by the data input/output unit 101. The control value recording unit 202 records the time-series data of the control values collected by the data input/output unit 101.

The label estimation unit 102 attaches labels obtained by pattern-classifying the time-series data of the measured values and the control values, or the time-series data obtained by processing thereof from the time-series data of the measured values obtained from the measured value recording unit 201 and the time-series data of the control values obtained from the control value recording unit 202, to the time-series data. A label is attached for each period (interval) of time-series data.

The label estimation unit 102 classifies time-series data using a clustering algorithm such as k-means clustering or Ward system. That is, the label is classification information obtained by classifying the time-series data for each section. Hereinafter, the time-series data of the target to which the label estimation unit 102 attaches a label is simply referred to as "target time-series data".

The know-how estimation unit 103 acquires the label of the target time-series data from the label estimation unit 102, estimates the operational know-how defined by a conditional probability using the label of the target time-series data as a state variable, estimates the operational know-how, and records the operational know-how in the operational know-how recording unit 203.

The display control unit 104 acquires the target time-series data, the label of the target time-series data, and the operational know-how from the operational know-how recording unit 203, and based on these items, creates display information for supporting the state grasp or operation manipulation of the water plant, and causes the display unit 105 to display the display information. As an example of the display information, an operation guidance screen that conveys a recommendation value of the control value to the operator, or an abnormality sign monitoring screen that conveys an abnormality sign of the water plant to the operator are included. The screens will be described later.

A-2. Operation

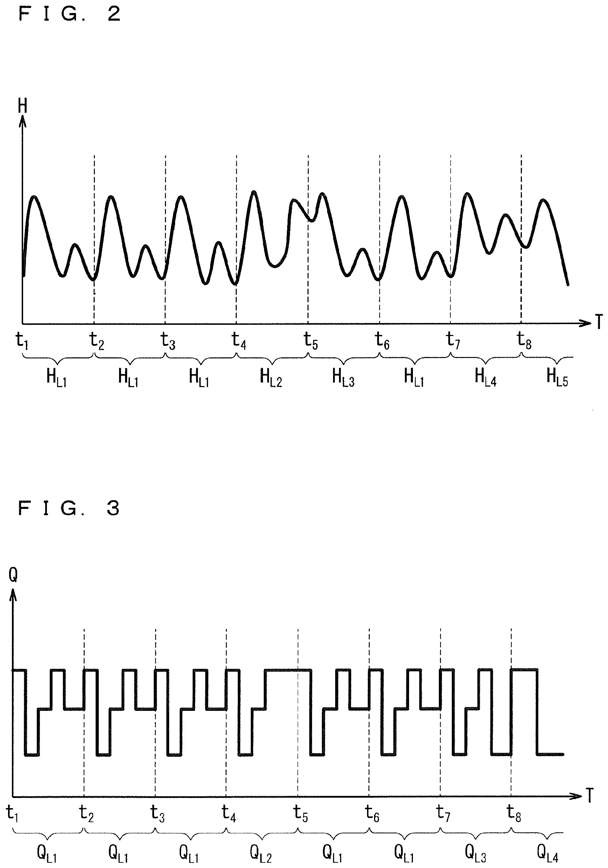

FIG. 2 and FIG. 3 are graphs illustrating the target time-series data to which a label is attached. The label estimation unit 102 classifies target time-series data using a clustering algorithm such as k-means clustering or Ward system for each period. The label estimation unit 102 attaches the same label to the waveforms determined to be similar, and attaches the different label to the waveforms determined to be different.

FIG. 2 is a graph illustrating the time-series data of the water level H being the measured values. The horizontal axis represents Time T. In FIG. 2, the labels $H_{L1}$, $H_{L1}$, $H_{L1}$, $H_{L2}$, $H_{L3}$, $H_{L1}$, $H_{L4}$, and $H_{L5}$ are attached to the water level H in ascending order by time.

FIG. 3 is a graph illustrating the time-series data of the water supply quantity Q being the control values. In FIG. 3, the labels $Q_{L1}$, $Q_{L1}$, $Q_{L1}$, $Q_{L2}$, $Q_{L1}$, $Q_{L1}$, $Q_{L3}$, and $Q_{L4}$ are attached to the water supply quantity Q in ascending order by time.

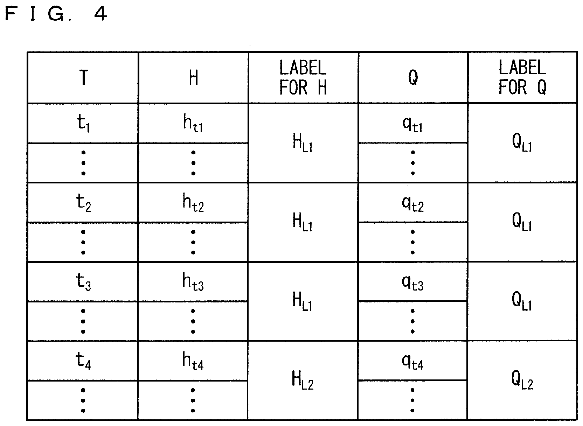

FIG. 4 is a graph illustrating the data format of the target time-series data and the labels. As illustrated in the table of FIG. 4, the time-series data of the water level H being the measured values, is composed of the values for each Time T. For example, the measured value at Time $t_1$ at the water level H is $h_{t1}$. Similarly, the time-series data of the water supply quantity Q being the control value, is also composed of the values for each Time T. For example, the measured value at Time $t_1$ at the water supply quantity Q is $q_{t1}$. Further, the label of the time-series data has a value indicating a label for each period to which the label is attached. For example, the label for the water level H is $H_{L1}$ between Times $t_1$ and $t_2$. Further, the label for the water supply quantity Q is $Q_{L1}$ between Times $t_1$ and $t_2$.

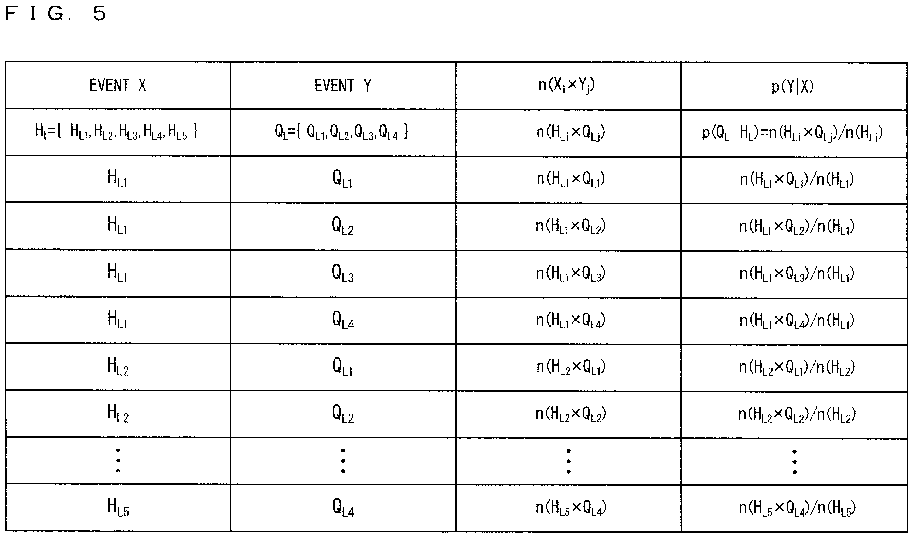

FIG. 5 is a table schematically illustrating the estimation method of operational know-how and the data format of operational know-how. Each column of the table in FIG. 5 represents Event X, Event Y, $n(X_i \times Y_j)$, and $P(Y|X)$. Event X represents the Cartesian product HL of the set based on the labels of the time-series data of the water level H. Event Y represents the Cartesian product $Q_L$ of the set based on the labels of the time-series data of the water supply quantity Q. $n(X_i \times Y_j)$ represents the frequency in which each element of the direct product set $(X \times Y)$ of Event X and Event Y occurs during an extraction target period of operational know-how. $P(Y|X)$ represents the conditional probability of Event Y when Event X occurs.

Event X is defined as $X=H_L=\{H_{L1},H_{L2},H_{L3},H_{L4},H_{L5}\}$ by the five types labels of the time-series data of water level H. Event Y is defined as $Y=Q_L=\{Q_{L1},Q_{L2},Q_{L3},Q_{L4}\}$ by four types of labels of time-series data of water supply quantity Q. The number of elements of each element of the direct product set $(X \times Y)$ is the occurrence frequency of each element of $(H_L \times Q_L)$, and is $n(H_{Li} \times Q_{Lj})$. At this time, the conditional probability $P(Y|X)$ of Event Y when Event X occurs is expressed by the conditional probability $p(Q_L|H_L)$, in which the label $Q_L$ of the time-series data of the water supply quantity Q is any of $Q_{L1}$, $Q_{L2}$, $Q_{L3}$, and $Q_{L4}$ when the label $H_L$ of the time-series data of the water level H is determined. That is, $p(Q_L|H_L)=(p(Q_L,H_L))/(p(H_L))=n(H_{Li} \times Q_{Lj})/n(H_{Li})$. Here, it is, $n(H_{Li})=\Sigma_j n(H_{Li} \times Q_{Lj})$.

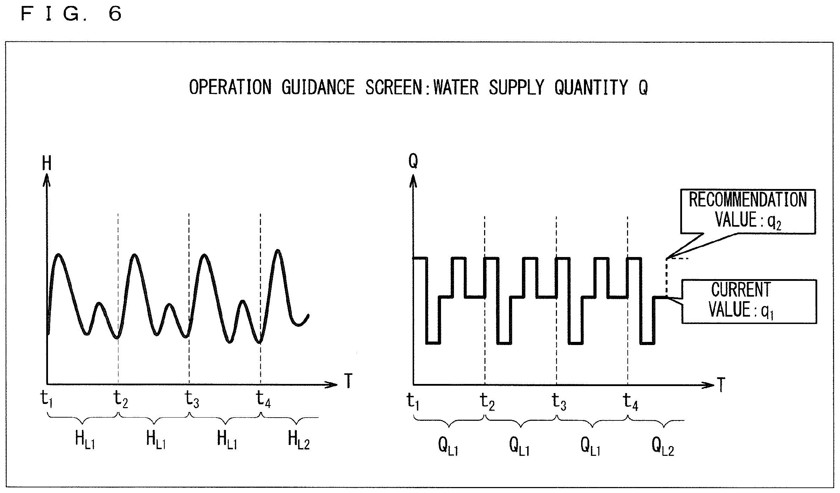

FIG. 6 is a diagram schematically illustrating the operation guidance screen according to the first embodiment regarding the water supply quantity Q. On the operation guidance screen, trend graphs regarding the state variables $Q_L$ and $H_L$ of the conditional probability $p(Q_L|H_L)$ representing the operational know-how regarding the determination of the water supply quantity Q are displayed. Further, the display control unit 104 compares the pattern of the current time-series data with the pattern of the past time-series data having the same label, and calculates the value of the pattern of the past time-series data having the highest degree of similarity as a recommendation value. The display control unit 104 can calculate degree of similarity of the time-series data using a degree of similarity calculation method such as the cross-correlation function method (CCT) or the dynamic time warping method (DTW). On the operation guidance screen of FIG. 6, the current value $q_1$ and the recommendation value $q_2$ of the water supply quantity Q are displayed.

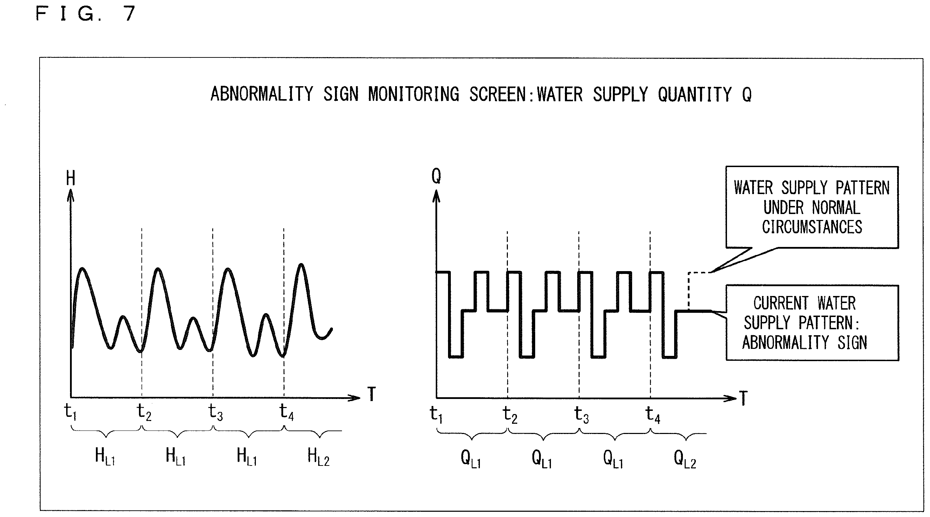

FIG. 7 is a diagram schematically illustrating an abnormality sign monitoring screen according to the first embodiment regarding the water supply quantity Q. On the abnormality sign monitoring screen, trend graphs regarding the state variables $Q_L$ and $H_L$ of the conditional probability $p(Q_L|H_L)$ representing the operational know-how regarding the determination of the water supply quantity Q are displayed. Further, the display control unit 104 compares the pattern of the current time-series data with the pattern of the past time-series data of each label, and determines the label of the past time-series data having the highest degree of similarity for the current time-series data. The display control unit 104 can calculate degree of similarity of the time-series data using a degree of similarity calculation method such as the cross-correlation function method (CCT) or the dynamic time warping method (DTW).

When the past time-series data having the highest degree of similarity has been registered as a normal pattern to the current time-series data, the display control unit 104 determines that it is an abnormality sign when the degree of deviation between the current time-series data and the past time-series data having the highest degree of similarity becomes larger. Further, when the past time-series data having the highest degree of similarity has been registered as an abnormal pattern to the current time-series data, the display control unit 104 determines that it is an abnormality sign when the current time-series data and the past time-series data having the highest degree of similarity match each other.

When determining the abnormality sign, the display control unit 104 creates display information indicating that fact. On the abnormality sign monitoring screen illustrated in FIG. 7, it is displayed that the current pattern of the time-series data of the water supply quantity Q deviates from the pattern of the time-series data of the water supply quantity Q under past normal circumstances and an abnormality sign has been determined.

A-3. Effect

As described above, according to the first embodiment, the operational know-how estimation device 1001 includes the data input/output unit 101 being a data acquisition unit that acquires the target time-series data being the time-series data of the measured values regarding the state of the water plant and the control values regarding the operation manipulation, the label estimation unit 102 being a classification information attachment unit that classifies the target time-series data for each section by a clustering algorithm and attaches the classification information being a classification result to the sections of the target time-series data, the know-how estimation unit 103 that calculates the conditional probability that the measured values and the control values are simultaneously held for each piece of classification information, and estimates the operational know-how representing the control values to be set for the measured values based on the conditional probability, and the display control unit 104 that creates the display information that supports the state understanding or the operation manipulation of the water plant based on the operational know-how and causes the display unit 105 to display the display information.

Therefore, according to the operational know-how estimation device 1001, even if the operator does not attach the classification information to the target time-series data, the label estimation unit 102 attaches the classification information and analyzes the target time-series data using the classification information, thereby, estimating the operational know-how of the water plant.

Further, an operational know-how estimation method implemented by the operational know-how estimation device 1001 of the first embodiment, target time-series data being time-series data of measured values regarding a state of a water plant and control values regarding operation manipulation is acquired, the target time-series data for each section is classified by a clustering algorithm, classification information being a classification result is attached to the sections of the target time-series data, a conditional probability that the measured values and the control values are simultaneously held for each classification information is calculated, operational know-how representing the control values to be set for the measured values is estimated based on the conditional probability, display information that supports state understanding or operation manipulation of the water plant is created based on the operational know-how, and a display unit is caused to display the display information.

Therefore, according to the operational know-how estimation method of the first embodiment, the classification information is automatically attached to the target time-series data even if the operator does not attach the classification information to the target time-series data, and the target time-series data is analyzed using the classification information and the operational know-how of the water plant is estimated.

Further, in the operational know-how estimation device 1001 of the first embodiment, the label estimation unit 102 being a classification information attachment unit, classifies the pattern of the target time-series data, and attaches the result of the pattern classification to the target time-series data as the classification information. Therefore, according to the operational know-how estimation device 1001, the classification information being the result of the pattern classification by the label estimation unit 102 is attached to the target time-series data even if the operator does not attach the classification information to the target time-series data, and the target time-series data can be analyzed using the classification information and the operational know-how of the water plant can be estimated.

B. Second Embodiment

B-1. Configuration

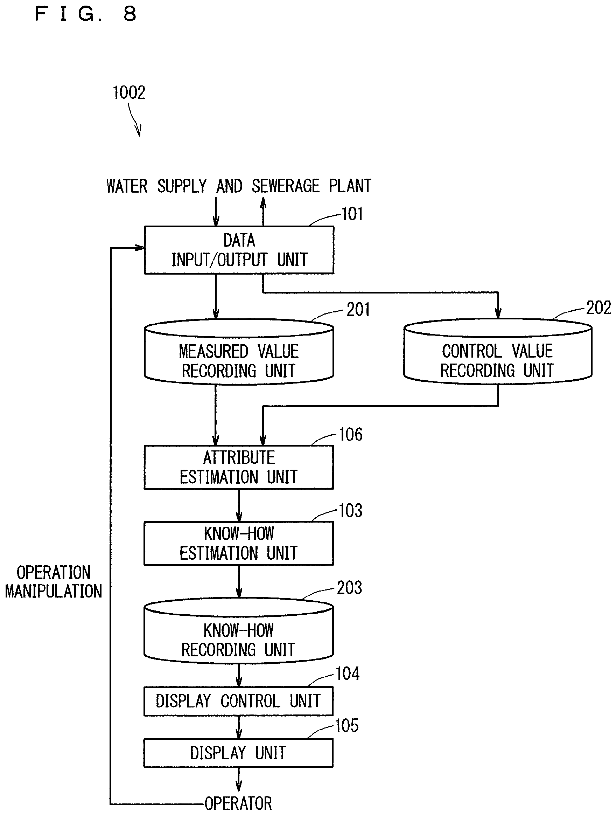

FIG. 8 is a block diagram illustrating a configuration of an operational know-how estimation device 1002 according to the second embodiment. As illustrated in FIG. 8, the operational know-how estimation device 1002 includes an attribute estimation unit 106 instead of the label estimation unit 102 as compared with the configuration of the operational know-how estimation device 1001 of the first embodiment.

The operational know-how estimation device 1002 includes an input device, an output device, a central processing unit, or CPU, a primary storage device, a secondary storage device, and, for example, communication equipment for connecting to networks such as intranets.

The data input/output unit 101 in FIG. 8 is implemented by the input device. The data input/output unit 101 may also be implemented by the communication equipment. Also, the know-how estimation unit 103, the display control unit 104, and the attribute estimation unit 106 in FIG. 8 are implemented by the CPU executing a software program stored in the primary storage device while storing data required for calculation in the secondary storage device or reading data required for calculation from the secondary storage device.

The display unit 105 in FIG. 8 is implemented by the output device. The measured value recording unit 201, the control value recording unit 202, and the operational know-how recording unit 203 in FIG. 8 are implemented by the primary storage device or the secondary storage device.

The data input/output unit 101 collects measured values regarding the process of the water supply and sewerage plant from the equipment constituting the water supply and sewerage plant, and inputs control values regarding the operation of the water supply and sewerage plant to the equipment constituting the water supply and sewerage plant.

The attribute estimation unit 106 acquires the time-series data of the measured values from the measured value recording unit 201, acquires the time-series data of the control values from the control value recording unit 202, and attaches the magnitude attribute to these tame-series data or the target time-series data being the time-series data obtained by processing these time-series data. The magnitude attribute represents understanding of the operator regarding the magnitude of the value of the time-series data, and has "Upper Limit Abnormality", "High", "Normal", "Low", "Lower Limit Abnormality" and the like as attribute values. The attribute estimation unit 106 estimates the magnitude attribute by applying a clustering algorithm to the target time-series data.

When the attribute estimation unit 106 uses a method focusing on the boundary of the increase or the decrease of the time-series data, the attribute estimation unit 106 extracts the minimum values and the maximum values that are the boundaries of the increase and the decrease of the target time-series data, clusters the distribution of the extracted minimum values and the maximum values, and the value that best separates each class is used as the boundary of attribute values, attaches the magnitude attribute based on the magnitude relationship of the values.

The know-how estimation unit 103 acquires the attribute values of the target time-series data from the attribute estimation unit 106, and estimates the operational know-how represented by operates know-how expressed by a causal relationship between the attribute values, or the operational know-how represented by the state transition of a state of the plant defined by a combination of a plurality of attribute values, and record either of estimated operational know-how in the operational know-how recording unit 203.

The display control unit 104 acquires the target time-series data, the label of the target time-series data, and the operational know-how from the operational know-how recording unit 203, and based on these items, creates the display information for supporting the state grasp or the operation manipulation of the water plant, and causes the display unit 105 to display the display information. As an example of the display information, in addition to the operation guidance screen or the abnormality sign monitoring screen described in the first embodiment, there is an education support information display screen that informs the operator of the state transition of the plant defined by the combination of a plurality of labels. The education support information display screen will be described later.

B-2. Operation

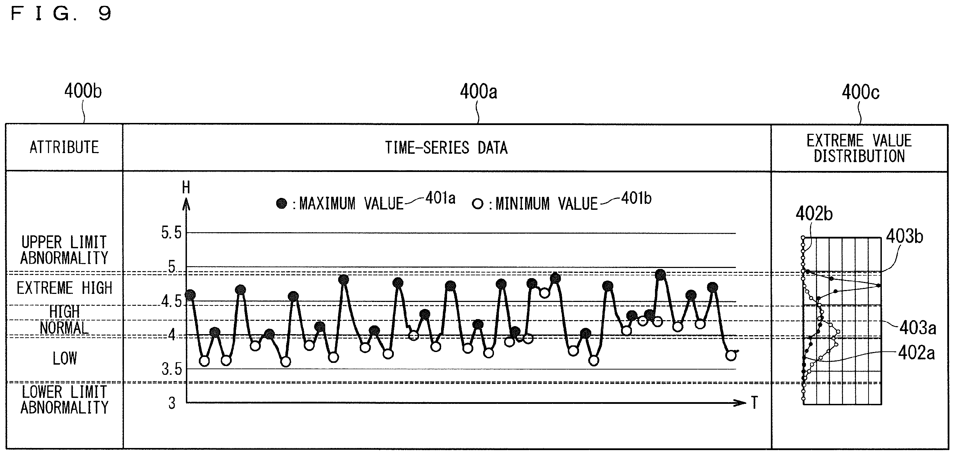

FIG. 9 is a diagram schematically illustrating an estimation method of the magnitude attribute by the attribute estimation unit 106. Time-series data 400a represents time-series data of measured values or control values used for extracting operational know-how, or time-series data obtained by processing them. In the example of FIG. 9, the time-series data of the water level H is represented. The attribute estimation unit 106 extracts the maximum values 401a and the minimum values 401b of the time-series data 400a in order to estimate the attribute 400b from the time-series data 400a, and clusters the distribution 402a of the maximum values 401a and the distribution 402b of the minimum values 401b, respectively to determine the boundaries of attribute values. For example, 403a illustrated in FIG. 9 represents one of the boundary values of the distribution of the maximum values, and 403b illustrated in FIG. 9 represents one of the boundary values of the distribution of the minimum values.

The attribute estimation unit 106 clusters the distribution 402a of the maximum values and the distribution 402b of the minimum values using a clustering algorithm such as k-means clustering or Ward system. The attribute 400b represents the result of estimating the operator's understanding of the magnitude of the time-series data of the measured values or the control values or the time-series data processed thereof, and is attached to each class which was subject to the classification of the distribution 402a of the maximum values 401a and the distribution 402b of the minimum values 401b. For example, when the distribution 402a of the maximum values 401a and the distribution 402b of the minimum values 401b are classified into six classes as illustrated in FIG. 9, for the attribute 400b, Upper Limit Abnormality, Extreme High, High, Normal, Low, and Lower Limit Abnormality are attached in order of magnitude relation.

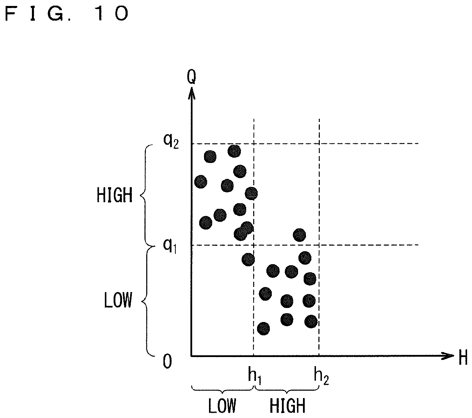

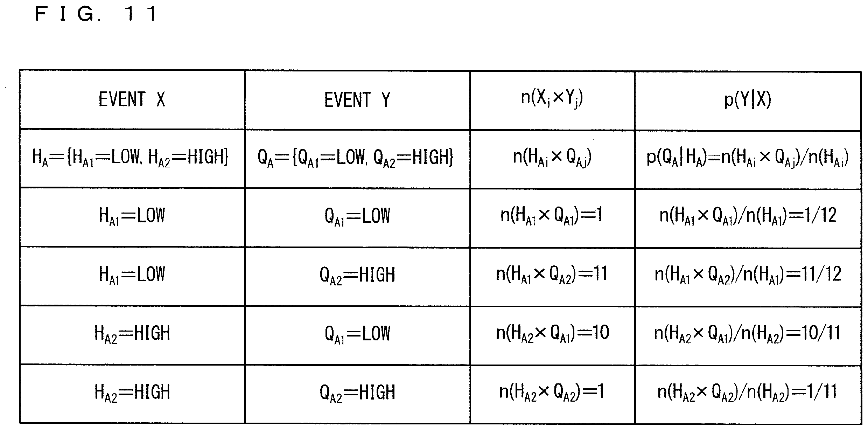

FIGS. 10 and 11 are diagrams schematically illustrating the estimation method and data format of operational know-how. FIG. 10 is a scatter diagram of the water level H and the water supply quantity Q. Regarding the water level H, two attributes of $H_A=\{H_{A1}(Low), H_{A2}(High)\}$ are attached, and regarding the water supply quantity Q, two attributes of $Q_A=\{Q_{A1}(Low), Q_{A2}(High)\}$ are attached.

FIG. 11 illustrates conditional probabilities calculated based on the number of data in the section to which each attribute illustrated in FIG. 10 is attached. Each column of the table in FIG. 11 represents Event X, Event Y, $n(X_i \times Y_j)$, and $P(Y|X)$. Event X represents the Cartesian product $H_A$ of the set based on the attribute of the time-series data of the water level H. Event Y represents the Cartesian product $Q_A$ of the set based on the attribute of the time-series data of the water supply quantity Q. $n(X_i \times Y_j)$ represents the frequency with which each element of the direct product set $(X \times Y)$ of Event X and Event Y occurs during an extraction target period of operational know-how. $P(Y|X)$ represents the conditional probability of Event Y when Event X occurs.

Event X is defined as $X=H_A=\{H_{A1}(Low), H_{A2}(High)\}$ by the two attributes of the time-series data of water level H. Event Y is defined as $Y=Q_A=\{Q_{A1}(Low), Q_{A2}(High)\}$ by the two attributes of the time-series data of the water supply quantity Q. The number of elements of each element of the direct product set $(X \times Y)$ is the occurrence frequency of each element of $(H_A \times Q_A)$, and is $n(H_{Ai} \times Q_{Aj})$. At this time, the conditional probability $P(Y|X)$ of Event Y when Event X occurs is expressed by the conditional probability $p(Q_A|H_A)$, with which the attribute $Q_A$ of the time-series data of the water supply quantity Q is any of $Q_{A1}$, $Q_{A2}$, when the attribute $H_A$ of the time-series data of the water level H is determined. That is, $p(Q_A|H_A)=(p(Q_A, H_A))/(p(H_A))=n(H_{Ai}\times Q_{Aj})/n(H_{Ai})$. Here, it is, $n(H_{Ai})=\Sigma jn(H_{Ai}\times Q_{Aj})$.

When the water level H is in the $H_{A1}$ (Low) section, the conditional probability $p(Q_{A2}|H_{A1})=11/12$ that sets the water supply quantity Q to $Q_{A2}$ (High) is the highest. Therefore, the know-how estimation unit 103 estimates the operational know-how that the operation method of setting the water supply quantity Q to $Q_{A2}$ (High) is a typical control value when the water level H is in the section of $H_{A1}$ (Low). Similarly, when the water level H is in the $H_{A2}$ (High) section, the conditional probability $p(Q_{A1}|H_{A2})=10/11$ that sets the water supply quantity Q to $Q_{A1}$ (Low) is the highest. Therefore, the know-how estimation unit 103 estimates the operational know-how that the operation method of setting the water supply quantity Q to $Q_{A1}$ (Low) is a typical control value when the water level H is in the section of $H_{A2}$ (High).

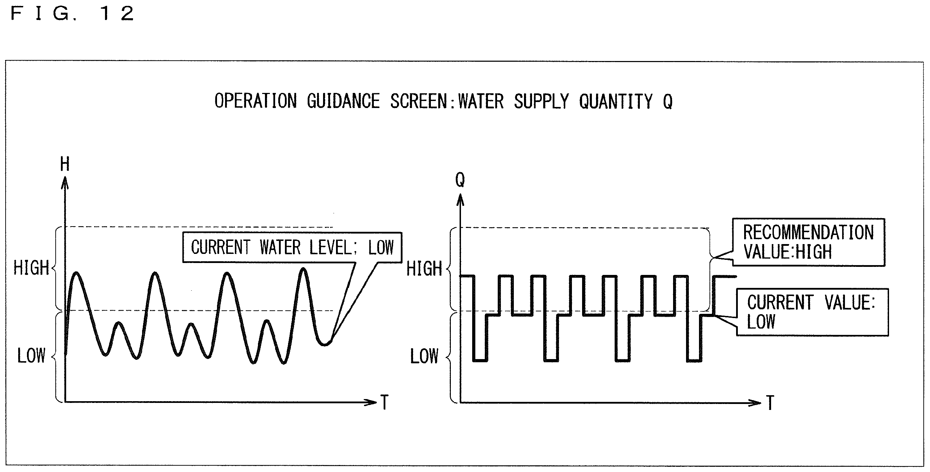

FIG. 12 is a diagram schematically illustrating the operation guidance screen according to the second embodiment regarding the water supply quantity Q. On the operation guidance screen, trend graphs or the like regarding the state variables $Q_A$ and $H_A$ of the conditional probability $p(Q_A|H_A)$ representing the operational know-how regarding the determination of the water supply quantity Q are displayed. Further, the display control unit 104 selects the highest conditional probability $p(Q_A|H_A)$ whose prior condition matches the attribute value of $H_A$ at the current time from conditional probability $p(Q_A|H_A)$, and calculates the range of the $Q_A$ attribute value at the selected $p(Q_A|H_A)$ and the Q value that takes the attribute value as the recommendation value. The information calculated by the display control unit 104 is displayed on the operation guidance screen regarding the water supply quantity Q. In FIG. 12, the attribute (Low) of the current value of the water supply quantity, the range of the recommendation value of the water supply quantity, and the attribute (High) are displayed.

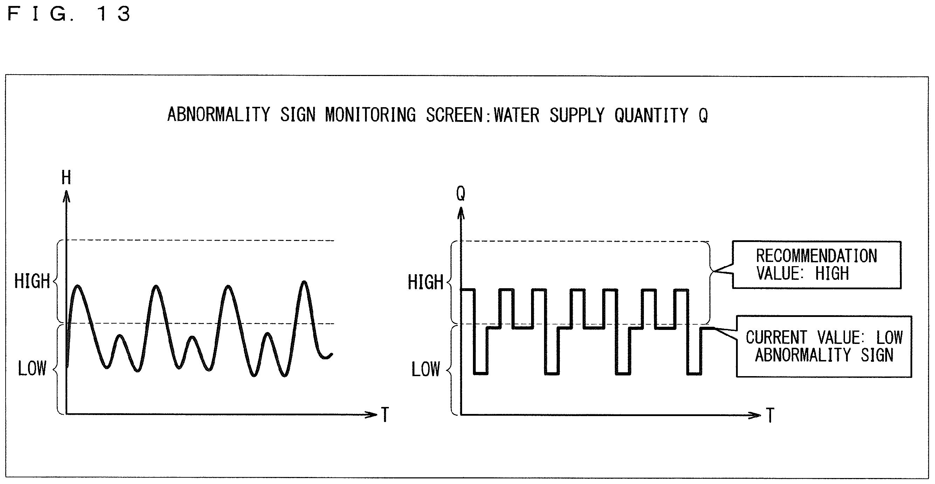

FIG. 13 is a diagram schematically illustrating an abnormality sign monitoring screen according to the second embodiment regarding the water supply quantity Q. On the abnormality sign monitoring screen, trend graphs regarding the state variables $Q_A$ and $H_A$ of the conditional probability $p(Q_A|H_A)$ representing the operational know-how regarding the determination of the water supply quantity Q are displayed. Further, the display control unit 104 determines it is the abnormal sign when the conditional probability whose prior condition matches the attribute value of $H_A$ at the current time and whose posterior condition matches the attribute value of $Q_A$ at the current time falls below a predetermined threshold value.

Then, when determining that it is the abnormal sign, the display control unit 104 selects the conditional probability $p(Q_A|H_A)$ that takes the highest value from the conditional probabilities whose prior condition matches the attribute value of $H_A$ at the current time, and displays the range of the $Q_A$ attribute value at the selected $p(Q_A|H_A)$ and the Q value that takes the attribute value as the recommendation value.

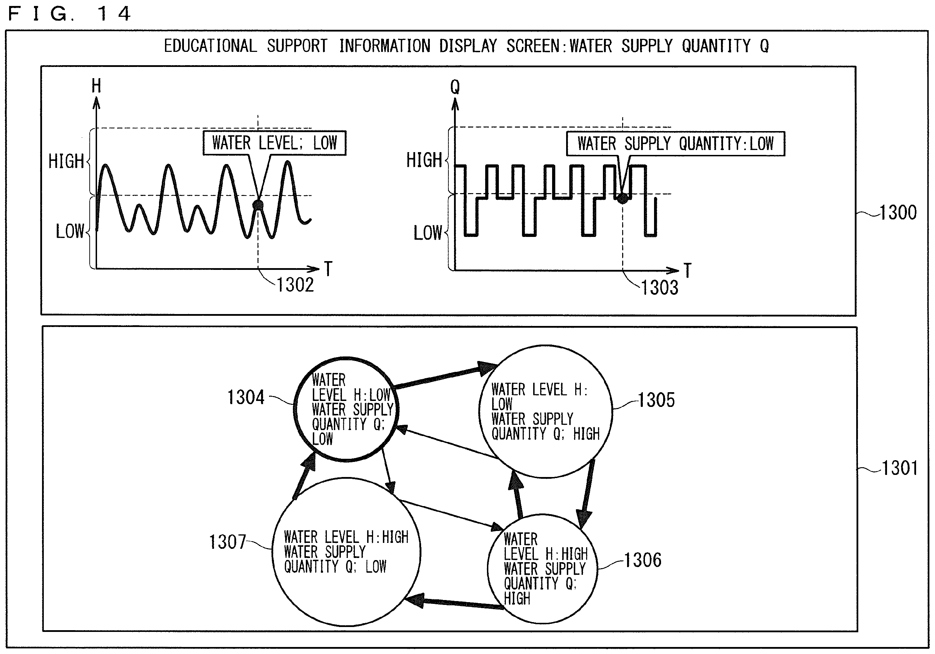

FIG. 14 is a diagram schematically illustrating an educational support information display screen regarding the water supply quantity Q. On the educational support information display screen, a trend graph 1300 regarding the state variables $Q_A$ and $H_A$ of the conditional probability $p(Q_A|H_A)$ representing the operational know-how regarding the determination of the water supply quantity Q is displayed. Black circles 1302 and 1303 in the trend graph 1300 indicate the time of interest. Further, the display control unit 104 creates a state transition diagram 1301 based on the occurrence frequency $n(H_{Ai}\times Q_{Aj})$ for each plant state defined by the direct product $H_{Ai}\times Q_{Aj}$ of the state variables $Q_A$ and $H_A$ and the number of state transitions between the plant states. In the state transition diagram 1301, each node 1304 to 1307 represents the plant state $H_{Ai}\times Q_{Aj}$, and each edge represents the state transition between each node 1304 to 1307. The occurrence frequency $n(H_{Ai}\times Q_{Aj})$ of plant states is represented by the size of each node 1304 to 1307, and the number of state transitions between plant states is represented by the thickness of edges. Of the nodes 1304 to 1307, the node 1304 representing the plant state at the time of interest is drawn with a thicker line than or a different color from the other nodes 1305 to 1307 to distinguish the node 1304 from the other nodes 1305 to 1307. The operator can change the time of interest back and forth by shifting the positions of the black circles 1302 and 1303 on the trend graph 1300 to the right and left. The node distinguished from other nodes and displayed in the state transition diagram 1301 also changes according to the change in the time of interest.

B-3. Effect

In the operational know-how estimation device 1002 of the second embodiment, the attribute estimation unit 106 being a classification information attachment unit estimates the magnitude attribute representing the understanding of the operator of the water plant with respect to the size of the value of the target time-series data by the classification for each section by the clustering algorithm, and attaches the magnitude attribute to a section of the target time-series data as the classification information. Therefore, according to the operational know-how estimation device 1002, even if the operator does not attach the magnitude attribute to the target time-series data, the label estimation unit 102 attaches the magnitude attribute and analyzes the target time-series data using the magnitude attribute, thereby, estimating the operational know-how of the water plant.

C. Third Embodiment

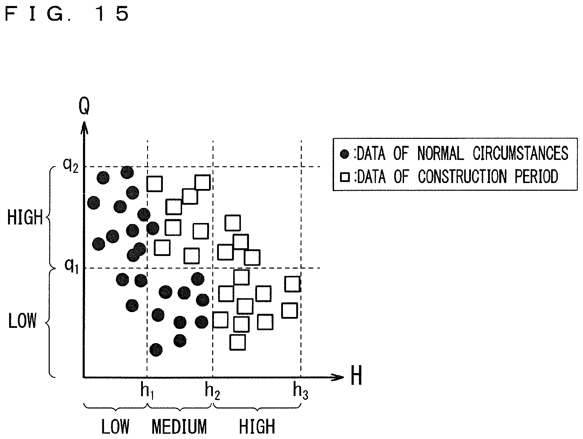

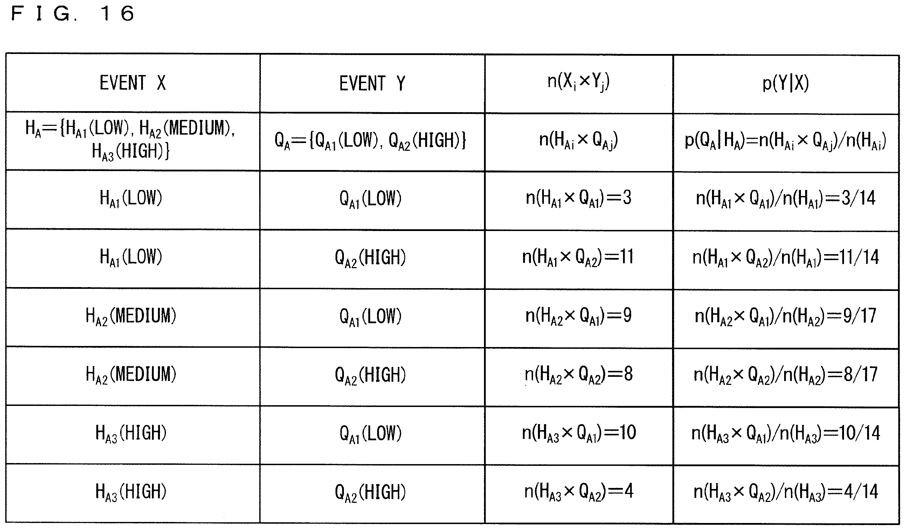

The operational know-how estimation device 1002 of the second embodiment estimates and attaches the attributes to the target time-series data of the water plant. However, the operational know-how estimation device 1002 have had a problem in that the estimation accuracy of the operational know-how becomes low because the operator estimates the operational know-how throughout full period without distinguish between a period in which an event used for determination of the operation manipulation occurs, or a period in which response operation to the event is performed (hereinafter, these periods are collectively referred to as an "event occurrence period"). An example thereof will be described with reference to FIGS. 15 and 16.

FIG. 15 is a scatter diagram of the water level H and the water supply quantity Q that distinguishes the data of the normal circumstances and the data of construction period. In FIG. 15, black circles represent the data of the normal circumstances, and white squares represent the data of construction period. FIG. 16 illustrates the conditional probabilities calculated by the know-how estimation unit 103 of the second embodiment based on the time-series data of the water level H and the water supply quantity Q illustrated in the scatter diagram in FIG. 15. The know-how estimation unit 103 of the second embodiment estimates the conditional probability without distinguishing between the data of the normal circumstances and the data of construction period.

As illustrated in FIG. 16, when the water level H is in the $H_{A2}$ (Medium) section, the number of data $n(H_{A2} \times Q_{A1})=9$ that the water supply quantity Q is in the $Q_{A1}$ (Low) section and the number of data $n(H_{A2} \times Q_{A2})=8$ that the water supply quantity Q is in the $Q_{A2}$ (High) are almost equal to each other. Therefore, the operational know-how estimation device 1002 cannot make a recommendation with a high conditional probability that whether the water supply quantity Q should be set to $Q_{A2}$ (High) or $Q_{A1}$ (Low) when the water level H is $H_{A2}$ (Medium).

Therefore, in the operational know-how estimation device of the third embodiment, the operational know-how is estimated with high accuracy by taking the event occurrence period as follows is in consideration.

### C-1. Configuration

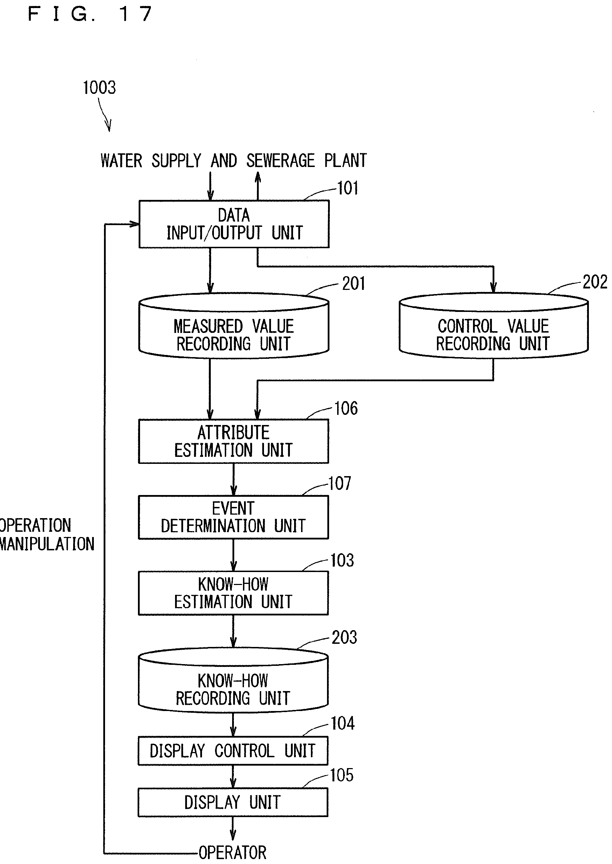

FIG. 17 is a block diagram illustrating a configuration of an operational know-how estimation device 1003 according to the third embodiment. As illustrated in FIG. 17, the operational know-how estimation device 1003 includes an event determination unit 107 in addition to the configuration of the operational know-how estimation device 1002 of the second embodiment. The event determination unit 107 acquires the target time-series data of the water plant from and its attribute values from the attribute estimation unit 106, determines the event occurrence period from the information, and attaches period information including information on the normal circumstances and the event occurrence period to the target time-series data. The "normal circumstances" indicate a period other than the event occurrence period. The know-how estimation unit 103 can improve the estimation accuracy of the operational know-how by estimating the operational know-how at normal circumstances or for each event occurrence period.

The operational know-how estimation device 1003 includes an input device, an output device, a central processing unit, or CPU, a primary storage device, a secondary storage device, and, for example, communication equipment for connecting to networks such as intranets.

The data input/output unit 101 in FIG. 17 is implemented by the input device. The data input/output unit 101 may also be implemented by the communication equipment. Also, the know-how estimation unit 103, the display control unit 104, the attribute estimation unit 106, and the event determination unit 107 in FIG. 17 are implemented by the CPU executing a software program stored in the primary storage device while storing data required for calculation in the secondary storage device or reading data required for calculation from the secondary storage device.

The display unit 105 in FIG. 17 is implemented by the output device. The measured value recording unit 201, the control value recording unit 202, and the operational know-how recording unit 203 in FIG. 17 are implemented by the primary storage device or the secondary storage device.

### C-2. Operation

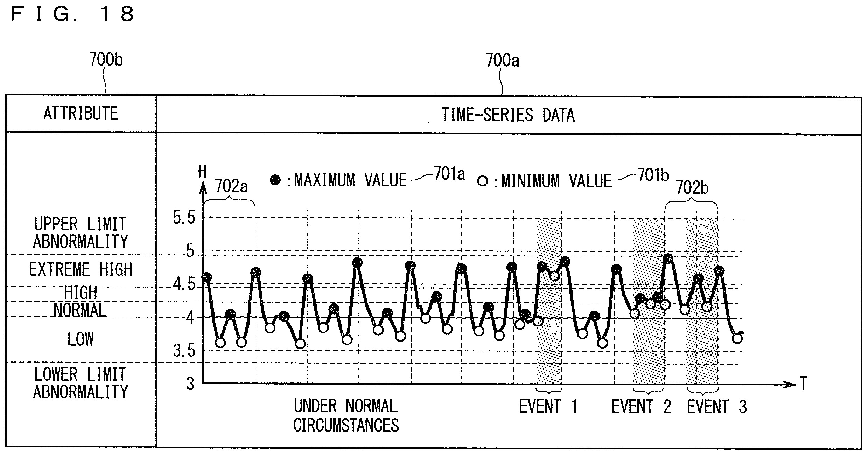

The operation contents of the event determination unit 107 will be described. FIG. 18 is a diagram illustrating a method in which the event determination unit 107 determines the event occurrence period from the time-series data 700a and its attribute 700b. The time-series data 700a is the time-series data of the water level H, and the attribute 700b represents the magnitude attribute of the time-series data 700a.

The event determination unit 107 attaches the event occurrence period to the time-series data 700a based on an event determination rule. Specifically, the event determination unit 107 first extracts a pattern of the normal circumstances based on a change pattern in the time-series of the maximum values 701a or the minimum values 701b of the time-series data 700a. The time-series data 700a contains the patterns, most of which are the pattern where the extreme value attribute 700b changes from "Extreme High, Low, Normal, Low, to Extreme High" as in the period 702a. Therefore, the event determination unit 107 sets the period in which the extreme value attribute 700b changes from "Extreme High, Low, Normal, Low, to Extreme High" as the normal circumstances.

In FIG. 18, the time-series data 700a repeats the pattern shown in the period 702a as the minimum unit under the normal circumstances. Next, the time-series data 700a is different from the pattern of the normal circumstances, in that, in the period 702b, the extreme value attribute 700b changes from "Extreme High, Normal, Extreme High, Normal, to Extreme High". Therefore, the event determination unit 107 determines that the period, from "Normal, Extreme High, to Normal" in the period 702b, which is a pattern different from that of the normal circumstances, is the occurrence period of Event 3. Similarly, the event determination unit 107 determines that the periods in which the time-series data 700a shows patterns different from that of the normal circumstances are the occurrence periods of Event 1 and Event 2. The event determination unit 107 may use the time interval of the extreme value in the time-series data 700a for event determination.

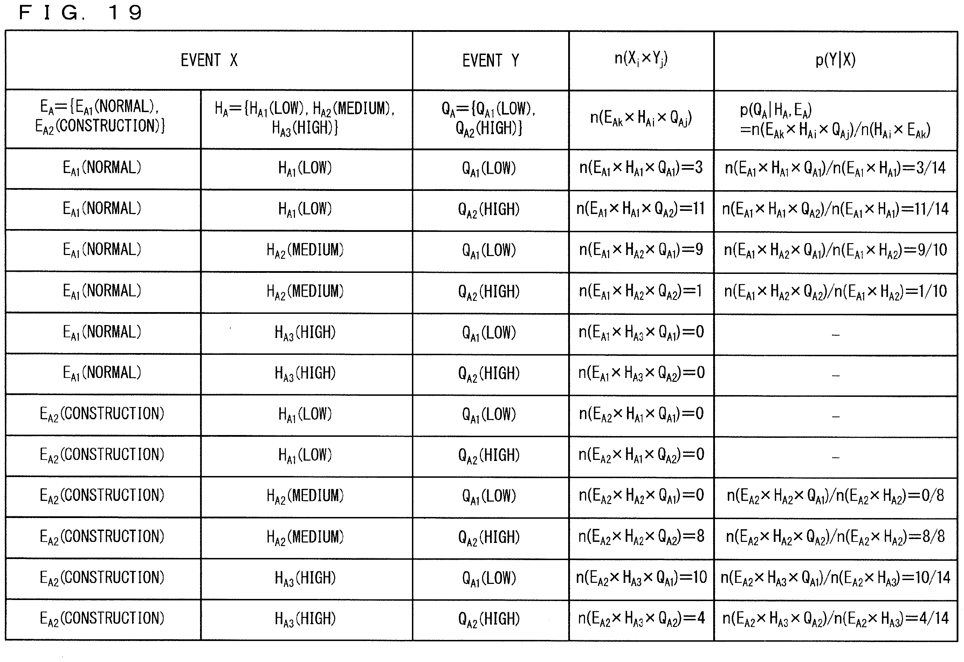

In FIG. 19, the conditional probabilities that the attributes of the water level H and the water supply quantity Q are state variables are illustrated, which are calculated by the know-how estimation unit 103 of the operational know-how estimation device 1003 based on the time-series data of the water level H and the water supply quantity Q illustrated as a scatter diagram in FIG. 15. In order for the event determination unit 107 to distinguish between the data of normal circumstances and the data of construction period, in FIG. 19, Event X includes the period attribute $E_A=\{E_{A1} \text{(Normal)}, E_{A2} \text{(Construction)}\}$ in addition to the attribute $H_A$ of the water level H. Therefore, the conditional probability $P(Y|X)$, which indicates whether the water supply quantity Q should be set to $Q_{A2}$ (High) or $Q_{A1}$ (Low), is expressed as $p(Q_A|H_A,E_A)$ using the period attribute $E_A$, the water level attribute $H_A$, and the water supply quantity attribute $Q_A$. In FIG. 19, when the water level attribute $H_A=H_{A2}$ (Medium) and the water plant is $E_A=E_{A1}$ (Normal) at the normal circumstances, $p(Q_A={}_{QA1}|H_A=H_{A2},E_A=E_{A1})=9/10$ whereas $p(Q_A=Q_{A2}|H_A=H_{A2},E_A=E_{A1})=1/10$. Therefore, the know-how estimation unit 103 can estimate the operational know-how that setting the water supply quantity Q to $Q_{A1}$ (Low) is a typical control method when the attribute of the water level H is $H_{A2}$ under the normal circumstances. Also, when the water level is $H_A=H_{A2}$ (Medium) and the plant is $E_A=E_{A2}$ (Construction) being the construction period, $p(Q_A=Q_{A1}|H_A=H_{A2},E_A=E_{A2})=0/8$, whereas $p(Q_A=Q_{A2}|H_A=H_{A2},E_A=E_{A2})=8/8$. Therefore, the know-how estimation unit 103 can estimate the operational know-how that setting the water supply quantity Q to $Q_{A2}$ (High) is a typical control method when the attribute of the water level H is $H_{A2}$ during the construction period.

In the above description, the operational know-how estimation device 1003 of the third embodiment is described as a configuration in which the event determination unit 107 is added to the operational know-how estimation device 1002 of the second embodiment. However, the operational know-how estimation device 1003 of the third embodiment may have a configuration in which the event determination unit 107 is added to the operational know-how estimation device 1001 of the first embodiment.

C-3. Effect

The operational know-how estimation device 1003 of the third embodiment includes the event determination unit (107) that detects the occurrence period of an event used by the operator of the water plant to determine the operation manipulation from the time-series data of the measured values. Then the know-how estimation unit 103 calculates the conditional probability that the measured values and the control values are simultaneously held for each piece of classification information with the event occurrence period and other periods being distinguished; therefore, according to the operational know-how estimation device 1003, the operational know-how is estimated with the event occurrence period and other periods being distinguished, and the accuracy of the operational know-how improves.

D. Fourth Embodiment

The operational estimation device 1003 according to the third embodiment has had a problem in that the estimation accuracy of the operational know-how is insufficient when the time-series data used for estimating operational know-how is bad, such as when the measured values or control values do not contain the information necessary for estimating operational know-how. An operational know-how estimation device 1004 of the fourth embodiment solves the above-mentioned problem by the following configuration.

D-1. Configuration

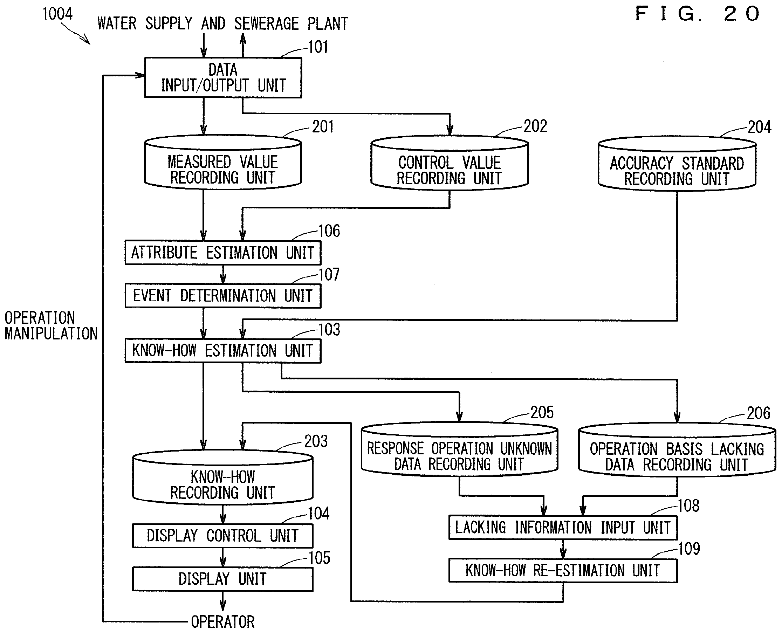

FIG. 20 is a block diagram illustrating a configuration of the operational know-how estimation device 1004 according to the fourth embodiment. The operational know-how estimation device 1004 includes an accuracy standard recording unit 204, a response operation unknown data recording unit 205, an operation basis lacking data recording unit 206, a lacking information input unit 108, and a know-how re-estimation unit 109, in addition to the configuration of the operational know-how estimation device 1003 of the third embodiment.

The operational know-how estimation device 1004 includes an input device, an output device, a central processing unit, or CPU, a primary storage device, a secondary storage device, and, for example, communication equipment for connecting to networks such as intranets.

The data input/output unit 101 and the lacking information input unit 108 in FIG. 20 are implemented by the input device. The data input/output unit 101 and the lacking information input unit 108 may also be implemented by the communication equipment. Also, the know-how estimation unit 103, the display control unit 104, the attribute estimation unit 106, the event determination unit 107, and the know-how re-estimation unit 109 in FIG. 20 are implemented by the CPU executing a software program stored in the primary storage device while storing data required for calculation in the secondary storage device or reading data required for calculation from the secondary storage device.

The display unit 105 in FIG. 20 is implemented by the output device. The measured value recording unit 201, the control value recording unit 202, the operational know-now recording unit 203, the accuracy standard recording unit 204, the response operation unknown data recording unit 205, and the operation basis lacking data recording unit 206 in FIG. 20 are implemented by the primary storage device or the secondary storage device.

The accuracy standard recording unit 204 records the estimation accuracy standard of the operational know-how.

The know-how estimation unit 103 acquires the target time-series data to which the magnitude attribute and the period attribute have been attached by the event determination unit 107, and estimates the operational know-how regarding the plant state and the operation manipulation from the acquired target time-series data. Further, based on the estimated operational know-how and the estimation accuracy standard acquired from the accuracy standard recording unit 204, the know-how estimation unit 103 determines data satisfying the estimation accuracy standard, response operation unknown data in which the response operation is unknown, and operation basis lacking data lacking basis of the response operation, among the target time-series data.

The response operation unknown data recording unit 205 records the target time-series data determined to be the response operation unknown data by the know-how estimation unit 103. The operation basis lacking data recording unit 205 records the target time-series data determined to be the operation basis lacking data by the know-how estimation unit 103.

The lacking information input unit 108 acquires the response operation unknown data from the response operation unknown data recording unit 205, acquires the operation basis lacking data from the operation basis lacking data recording unit 206, based on the acquired data, requests the operator or the like being a user to input the response operation data and the operation basis data, and accepts the input.

based on the response operation data and the response operation lacking data obtained from the lacking information input unit 108, or the operation basis data and the operation basis lacking data obtained from the lacking information input unit 108, the know-how re-estimation unit 109 re-estimates the state of the plant and the operational know-how regarding operation manipulation, thereby improving the estimation accuracy of the operational know-how.

The operation know-how recording unit 203 records the operational know-how obtained from the know-how estimation unit 103 and the know-how re-estimation unit 109.

D-2. Operation

The know-how estimation unit 103 of the fourth embodiment estimates the operational know-how based on the target time-series data, and also determines whether the estimation accuracy of the operational know-how satisfies the estimation accuracy standard using statistics such as mutual information.

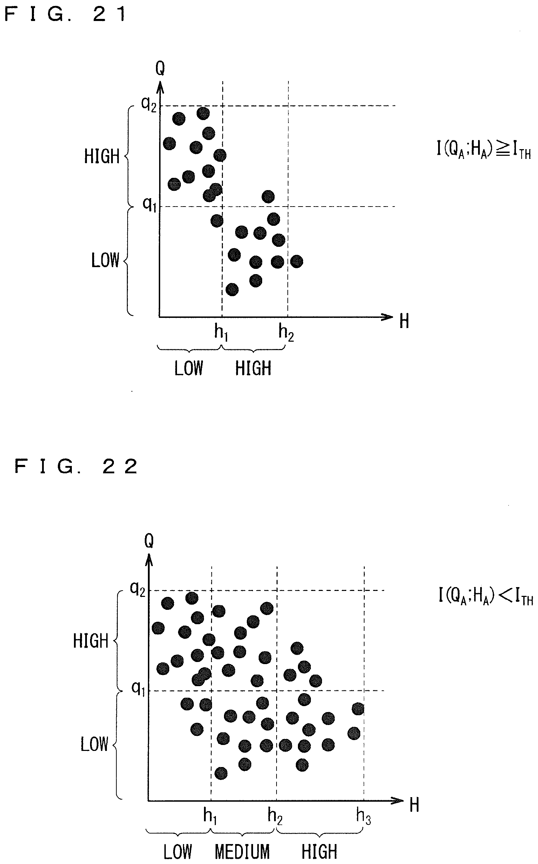

FIG. 21 is a scatter diagram of the water level H and the water supply quantity Q when the estimation accuracy of the operational know-how satisfies the estimation accuracy standard. The know-how estimation unit 103 of the fourth embodiment calculates the mutual information amount $I(Q_A; H_A)$ of the attribute value $Q_A$ of the water supply quantity Q and the attribute value $H_A$ of the water level H. The mutual information amount $I(Q_A; H_A)$ represents the amount of information obtained regarding the attribute value $Q_A$ of the water supply quantity by knowing the attribute value $H_A$ of the water level. If the mutual information amount $I(Q_A; H_A)$ is equal to or higher than the threshold value $I_{TH}$, the know-how estimation unit 103 determines that the estimation accuracy of the operational know-how satisfies the estimation accuracy standard.

That is, the mutual information amount $I(Q_A; H_A)$ is a measure for the estimation accuracy of the operational know-how estimated from the time-series data of the water supply quantity Q and the time-series data of the water level H, and its threshold value $I_{TH}$ is the estimation accuracy standard of the operational know-how. Here, it is $I_{TH}=0.2[bit]$. In the example of FIG. 21, the probability $p(H_{A1},Q_{A1})=1/22$ that $H_{A1} \wedge Q_{A1}$ holds, and similarly, $p(H_{A2},Q_{A1})=9/22$, $p(H_{A1},Q_{A2})=11/22$, $p(H_{A2},Q_{A2})=1/22$, $p(H_{A1})=12/22$, $p(H_{A2})=10/22$, $p(Q_{A1})=10/22$, and $p(Q_{A2})=12/22$. Therefore, the mutual information $I(Q_A; H_A)$ is expressed as follows.

[Expression 1]

$$=0.56 \ [bit]$$

Therefore, $I(Q_A; H_A) \geq I_{TH}$ is established and the know-how estimation unit 103 determines that the estimation accuracy of the operational know-how satisfies the estimation accuracy standard.

FIG. 22 is a scatter diagram of the water level H and the water supply quantity Q when the estimation accuracy of the operational know-how does not satisfy the estimation accuracy standard. Similar to the example in FIG. 21, the threshold value of mutual information is set to $I_{TH}=0.2[bit]$. In the example in FIG. 22, it is $p(H_{A1},Q_{A1})=3/46$, $p(H_{A2},Q_{A1})=9/46$, $p(H_{A3},Q_{A1})=10/46$, $p(H_{A1},Q_{A2})=11/46$, $p(H_{A2},Q_{A2})=9/46$, $p(H_{A3},Q_{A2})=4/46$, $p(H_{A1})=14/46$, $p(H_{A2})=18/46$, $p(H_{A3})=14/46$, $p(Q_{A1})=22/46$, $p(Q_{A2})=24/46$. Therefore, $I(Q_A; H_A)=0.12[bit]$, and $I(Q_A; H_A) < I_{TH}$. Therefore, the know-how estimation unit 103 determines that the estimation accuracy of the operational know-how does not satisfy the estimation accuracy standard.

When the estimation accuracy of the operational know-how does not satisfy the estimation accuracy standard, the know-how re-estimation unit 109 re-estimates the operational know-how. The know-how re-estimation unit 109 re-estimates the operational know-how using, for example, the operation basis lacking data recorded in the operation basis lacking data recording unit 206 and the operation basis data input to the lacking information input unit 108. Here, it is assumed that the user inputs the operation basis data that "$e_1$ or after in the period E is a construction period and the period before $e_1$ is normal circumstances" in the lacking information input unit 108. This operation basis data can be said to be attribute information regarding the period of the operation basis lacking data.

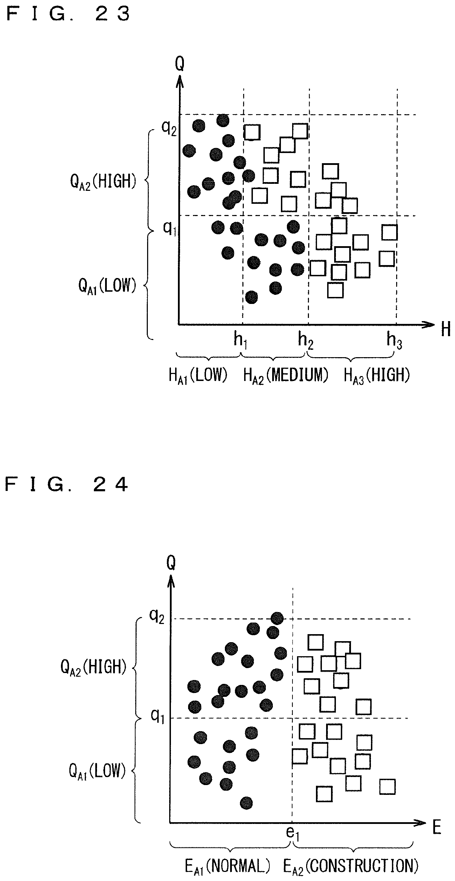

The know-how re-estimation unit 109 can distinguish the operation basis lacking data into the data of normal circumstances and the data of construction period with the operation basis data. With the distinction, the scatter diagram of the water level H and the water supply quantity Q illustrated in FIG. 22 is represented as illustrated in FIG. 23. In FIG. 23, the data of normal circumstances ($E_{A1}$) is represented by black circles, and the data of construction period ($E_{A2}$) is represented by white squares. FIG. 24 is a scatter diagram of the period E and the water supply quantity Q that are distinguished into the normal circumstances and the construction period. In FIG. 24, the data of normal circumstances ($E_{A1}$) is represented by black circles, and the data of construction period ($E_{A2}$) is represented by white squares.

In the example of FIG. 23, the know-how re-estimation unit 109 calculates a simultaneous occurrence probability for each attribute of the water level H, the water supply quantity Q, and the period E based on the data occurrence frequency. They are $p(H_{A1},Q_{A1},E_{A1})=3/46$, $p(H_{A2},Q_{A1},E_{A1})=9/46$, $p(H_{A3},Q_{A1},E_{A1})=0/46$, $p(H_{A1},Q_{A2},E_{A1})=11/46$, $p(H_{A2},Q_{A2},E_{A1})=1/46$, $p(H_{A3},Q_{A2},E_{A1})=0/46$, $p(H_{A1},Q_{A1},E_{A2})=0/46$, $p(H_{A2},Q_{A1},E_{A2})=0/46$, $p(H_{A3},Q_{A1},E_{A2})=10/46$, $p(H_{A1},Q_{A2},E_{A2})=0/46$, $p(H_{A2},Q_{A2},E_{A2})=8/46$, $p(H_{A3},Q_{A2},E_{A2})=4/46$, $p(H_{A1},E_{A1})=14/46$, $p(H_{A2},E_{A1})=10/46$, $p(H_{A3},E_{A1})=0/46$, $p(H_{A1},E_{A2})=0/46$, $p(H_{A2},E_{A2})=8/46$, $p(H_{A3},E_{A2})=14/46$, $p(Q_{A1},E_{A1})=12/46$, $p(Q_{A2},E_{A1})=12/46$, $p(Q_{A1},E_{A2})=10/46$, $p(Q_{A2},E_{A2})=12/46$, $p(E_{A1})=24/46$, and $p(E_{A2})=22/46$.

Therefore, the mutual information amount $I(Q_A; H_A|E_A)=0.40$ [bit]. Here, the mutual information amount $I(Q_A; H_A|E_A)$ is an information amount regarding the attribute $Q_A$ of the water supply quantity obtained by knowing the attribute $H_A$ of the water level after distinguishing whether the attribute $E_A$ of the period is $E_{A1}$ (Normal) or $E_{A2}$ (Construction). Therefore, $I(Q_A; H_A|E_A) \geq I_{TH}$ is established and the know-how re-estimation unit 109 determines that the estimation accuracy of the operational know-how satisfies the estimation accuracy standard. Then, the know-how re-estimation unit 109 calculates the conditional probability $p(Q_A|H_A, E_A)$ and re-estimates the operational know-how from $p(Q_A|H_A, E_A)$.

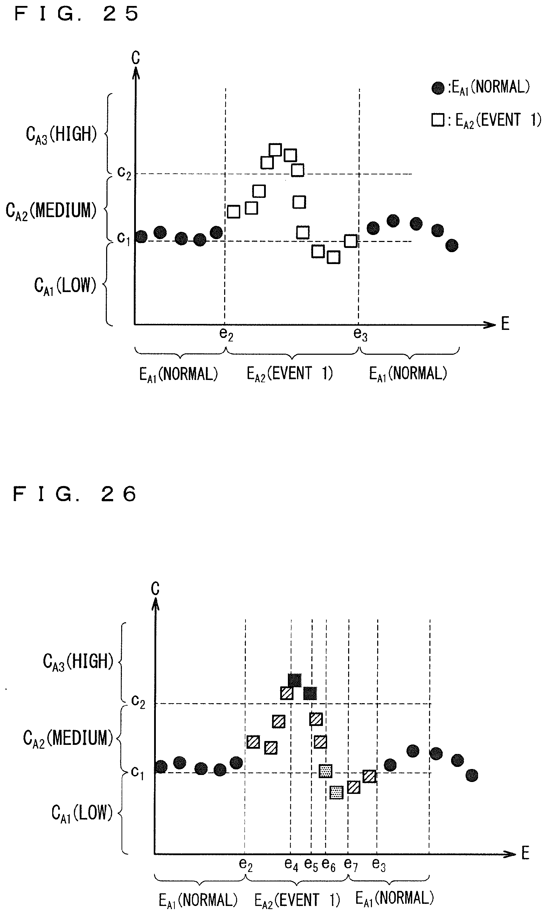

FIG. 25 is a scatter diagram of the period E and the reaction tank phosphorus concentration C representing an example of the response operation unknown data. The reaction tank phosphorus concentration C takes the value of $C_{A2}$ (Medium) or $C_{A1}$ (Low) under normal circumstances, but it takes the value of $C_{A3}$ (High) during the period $E_{A2}$ of Event 1, and then it returns to $C_{A2}$ (Medium) and $C_{A1}$ (Low), which is an unusual pattern. However, there is no time-series data of the control value in the period $E_{A2}$ of Event 1; therefore, the know-how estimation unit 103 assumes to determine that the time-series data of the reaction tank phosphorus concentration C is the response operation unknown data. In FIG. 25, the data of normal circumstances is represented by black circles, and the data during Event 1 period is represented by white squares.

Therefore, the know-how re-estimation unit 109 re-estimates the operational know-how using the response operation unknown data recorded in the response operation unknown data recording unit 205 and the response operation data input to the lacking information input unit 108. Here, it is assumed that the user has input the response operation data that "the response operation periods in Event 1 are from $e_4$ to es, and from $e_6$ to $e_7$" and "the drug injection amount L is incremented by $l_1$ from $e_4$ to es and the drug injection amount L is decremented by $l_1$ from $e_6$ to $e_7$" to the lacking information input unit 108. That is, the response operation data is the time-series data of control values in the event occurrence period in the response operation unknown data.

By the response operation data, the know-how re-estimation unit 109 can distinguish the response operation unknown data into periods of $e_2$ or before and $e_3$ or after of normal circumstances ($E_{A1}$), response operation non-execution periods that from $e_2$ to $e_4$, from es to $e_6$, and from $e_7$ to $e_3$, a drug injection amount L incrementing period ($E_{A2-2}$) at the occurrence of Event 1 from $e_4$ to $e_5$, or a drug injection amount L decrementing period ($E_{A2-3}$) at the occurrence of Event 1 from $e_6$ to $e_7$. With the distinction, the scatter diagram of the period E and the reaction tank phosphorous concentration C illustrated in FIG. 25 is represented as illustrated in FIG. 26. In FIG. 26, the data of the period attribute $E_{A1}$ is represented by black circles, the data of the period attribute $E_{A2-1}$ is represented by diagonal hatched squares, the data of the period attribute $E_{A2-2}$ is represented by black squares, and the data of the period attribute $E_{A2-3}$ is represented by squares with a sand hatch pattern.

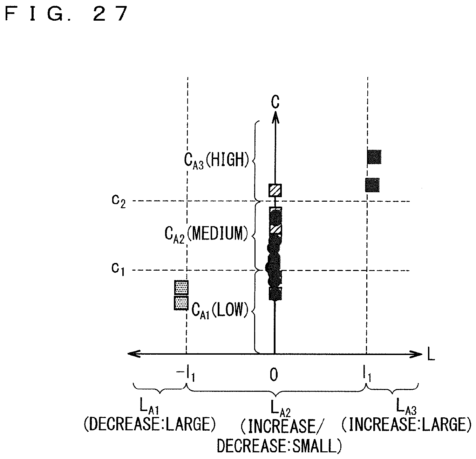

FIG. 27 is a scatter diagram of a drug injection amount L and the reaction tank phosphorus concentration C. Also in FIG. 27, the data of the period attribute $E_{A1}$ is represented by black circles, the data of the period attribute $E_{A2-1}$ is represented by diagonal hatched squares, the data of the period attribute $E_{A2-2}$ is represented by black squares, and the data of the period attribute $E_{A2-3}$ is represented by squares with a sand hatch pattern.

In the example of FIG. 27, the know-how re-estimation unit 109 calculates a simultaneous occurrence probability for each attribute of the drug injection amount L and the reaction tank phosphorous C based on the data occurrence frequency. They are $p(L_{A1}, C_{A1})=2/22$, $p(L_{A2},C_{A1})=4/22$, $p(L_{A3},C_{A1})=0/22$, $p(L_{A1}, C_{A2})=0/22$, $p(L_{A2},C_{A2})=13/22$, $p(L_{A3},C_{A2})=0/22$, $p(L_{A1}, C_{A3})=0/22$, $p(L_{A2},C_{A3})=1/22$, $p(L_{A3},C_{A3})=2/22$, $p(L_{A1})=2/22$, $p(L_{A2})=18/22$, $p(L_{A3})=2/22$, $p(C_{A1})=6/22$, $p(C_{A2})=13/22$, and $p(C_{A3})=3/22$.

Therefore, the mutual information amount $I(L_A;C_A)=0.49$ [bit]. Here, the mutual information amount $I(L_A; C_A)$ is an information amount regarding an attribute $L_A$ of a drug injection amount increase/decrease value obtained by knowing the attribute $C_A$ of the reaction tank phosphorus concentration. Therefore, $I(L_A; C_A) \geq I_{TH}$ is established and the know-how re-estimation unit 109 determines that the estimation accuracy of the operational know-how satisfies the estimation accuracy standard. Then, the know-how re-estimation unit 109 calculates the conditional probability $p(L_A|C_A)$ and re-estimates the operational know-how from $p(L_A|C_A)$.

In the above description, the operational know-how estimation device 1004 of the fourth embodiment is described as a configuration in which the know-how re-estimation unit 109 and the like are added to the operational know-how estimation device 1003 of the third embodiment. However, the operational know-how estimation device 1004 of the fourth embodiment may have a configuration in which the know-how re-estimation unit 109 and the like are added to the operational know-how estimation device 1001 or 1002 of the first or second embodiment.

D-3. Effect

The operational know-how estimation device 1004 of the fourth embodiment includes the lacking information input unit 108 which is an input unit for receiving input from a user, and the know-how re-estimation unit 109 that re-estimates the operational know-how. The know-how estimation unit 103 determines that the time-series data of the measured values is the response operation unknown data when the time-series data of the control values in the event occurrence period determined from the time-series data of the measured values does not exist.

The lacking information input unit 108 receives the time-series data of control values in the event occurrence period in the response operation unknown data as the response operation data from the user. The know-how re-estimation unit 109 re-estimates the operational know-how based on the response operation unknown data and the response operation data. Therefore, according to the operational know-how estimation device 1004, even if there is the response operation unknown data, the operational know-how can be estimated with high accuracy by supplementing the response operation unknown data with the response operation data received from the user.

Further, in the operational know-how estimation device 1004 of the fourth embodiment, the know-how estimation unit 103 determines that the time-series data of the measured values and the control values as the operation basis lacking data when the mutual information amount between the time-series data of the measured values and the time-series data of the control values is equal to or less than the predetermined threshold value.

The lacking information input unit 108 receives the attribute information regarding the period of the operation basis lacking data as the operation basis data from the user. The know-how re-estimation unit 109 re-estimates the operational know-how based on the operation basis lacking data and the operation basis data. Therefore, according to the operational know-how estimation device 1004, even if there is the operation basis lacking data, the operational know-how can be estimated with high accuracy by supplementing the operation basis lacking data with the operation basis data received from the user.

E. Fifth Embodiment

In the operational know-how estimation device 1004 of the fourth embodiment, there has been a problem in that the attribute information indicating the understanding of the operator is estimated and attached to the target time-series data, but the number of attribute information attached becomes large in number when compared to the understanding of the operator, depending on the value of the target time-series data. An operational know-how estimation device 1005 of the fifth embodiment solves the above-mentioned problem by the following configuration.

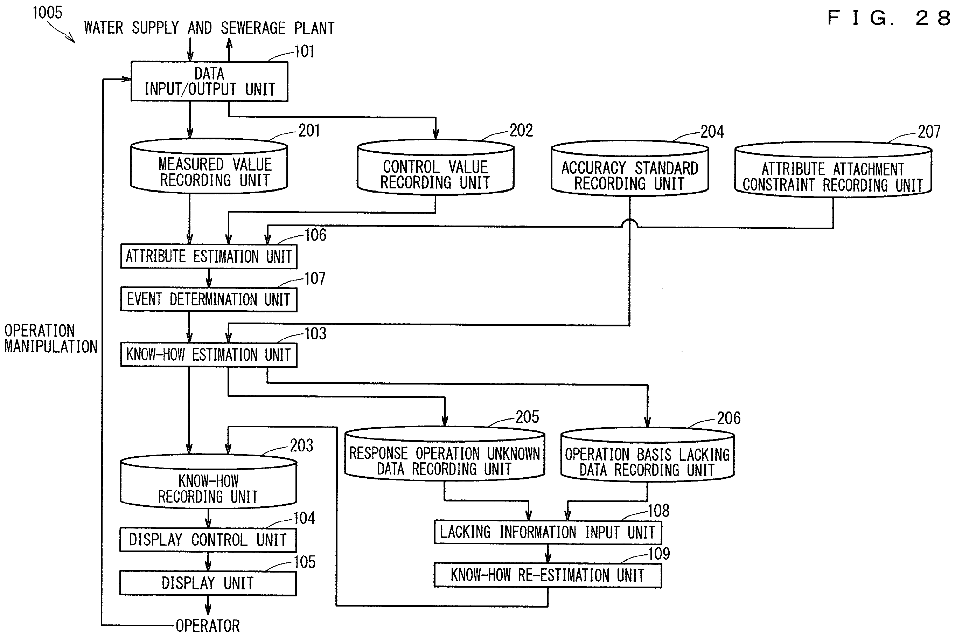

FIG. 28 is a block diagram illustrating a configuration of the operational know-how estimation device 1005 according to the fifth embodiment. the operational know-how estimation device 1005 includes an attribute attachment constraint recording unit 207 in addition to the configuration of the operational know-how estimation device 1004 of the fourth embodiment.

The operational know-how estimation device 1005 includes an input device, an output device, a central processing unit, or CPU, a primary storage device, a secondary storage device, and, for example, communication equipment for connecting to networks such as intranets.

The data input/output unit 101 and the lacking information input unit 108 in FIG. 28 are implemented by the input device. The data input/output unit 101 and the lacking information input unit 108 may also be implemented by the communication equipment. Also, the know-how estimation unit 103, the display control unit 104, the attribute estimation unit 106, the event determination unit 107, and the know-how re-estimation unit 109 in FIG. 28 are implemented by the CPU executing a software program stored in the primary storage device while storing data required for calculation in the secondary storage device or reading data required for calculation from the secondary storage device.

The display unit 105 in FIG. 28 is implemented by the output device. The measured value recording unit 201, the control value recording unit 202, the operational know-now recording unit 203, the accuracy standard recording unit 204, the response operation unknown data recording unit 205, the operation basis lacking data recording unit 206, and the attribute attachment constraint recording unit 207 in FIG. 28 are implemented by the primary storage device or the secondary storage device.

The attribute attachment constraint recording unit 207 records the attribute attachment constraint. When estimating the attribute, the attribute estimation unit 106 estimates the attribute after taking the attribute attachment constraint recorded in the attribute attachment constraint recording unit 207 into consideration.

An example of the attribute attachment constraint is "a plurality of attributes must not be attached to a section in which the change width of the time-series data is equal to or less than a certain percentage of the maximum change width". The maximum change width of the time-series data is calculated from the maximum value and the minimum value. In this case, if a plurality of attributes are estimated in the section where the change width of the time-series data is equal to or less than a certain percentage of the maximum change width, the attribute estimation unit 106 calculates the attribute that integrates the attributes, and attaches it to the section of the time-series data. In this manner, the attribute attachment constraint is a constraint regarding the section length of the target time-series data to which one piece of attribute information is attached.

In the above description, the operational know-how estimation device 1005 of the fifth embodiment is described as a configuration in which the attribute attachment constraint recording unit 207 is added to the operational know-how estimation device 1004 of the fourth embodiment. However, the operational know-how estimation device 1005 of the fifth embodiment may have a configuration in which the attribute attachment constraint recording unit 207 is added to a configuration in which the attribute estimation unit 106 is added to the operational know-how estimation device 1002 or 1003 of the second or third embodiment.

According to the operational know-how estimation device 1005 of the fifth embodiment, the attribute estimation unit 106 being a classification information attachment unit attaches the attribute information to the section of the target time-series data according to the attribute attachment constraint which is the constraint regarding the section length of the target time-series data to which one piece of attribute information is attached. Therefore, according to the operational know-how estimation device 1005 of the fifth embodiment, that the attribute information attached to the target time-series data becomes larger in number when compared to the understanding of the operator can be avoided regardless of the target time-series data.

## F. Sixth Embodiment

In the operational know-how estimation device 1004 of the fourth embodiment, the event occurrence period is determined in the target time-series data. However, there has been a problem in that, depending on the value of the target time-series data, the number of types of events to be determined becomes large in numbers when compared to the understanding of the operator. An operational know-how estimation device 1006 of the sixth embodiment solves the above-mentioned problem by the following configuration.

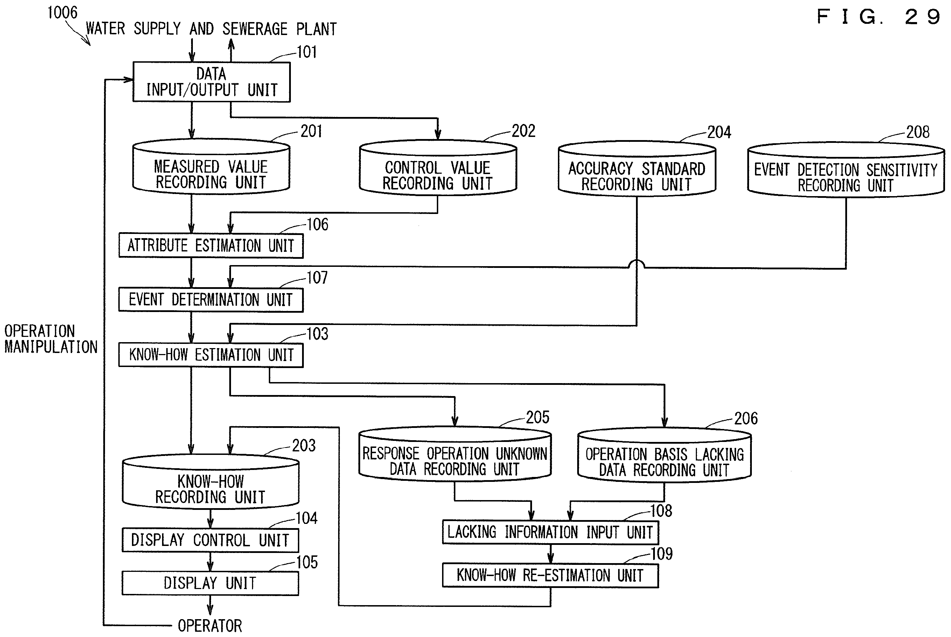

FIG. 29 is a block diagram illustrating a configuration of the operational know-how estimation device 1006 according to the sixth embodiment. The operational know-how estimation device 1006 includes an event detection sensitivity recording unit 208 in addition to the configuration of the operational know-how estimation device 1004 of the fourth embodiment. The event detection sensitivity recording unit 208 records event detection sensitivity. The event detection sensitivity indicates the matching degree of the feature amounts in two sections that can be regarded as sections of the target time-series data, in which the events occurring are the same.

The operational know-how estimation device 1006 includes an input device, an output device, a central processing unit, or CPU, a primary storage device, a secondary storage device, and, for example, communication equipment for connecting to networks such as intranets.

The data input/output unit 101 and the lacking information input unit 108 in FIG. 29 are implemented by the input device. The data input/output unit 101 and the lacking information input unit 108 may also be implemented by the communication equipment. Also, the know-how estimation unit 103, the display control unit 104, the attribute estimation unit 106, the event determination unit 107, and the know-how re-estimation unit 109 in FIG. 29 are implemented by the CPU executing a software program stored in the primary storage device while storing data required for calculation in the secondary storage device or reading data required for calculation from the secondary storage device.

The display unit 105 in FIG. 29 is implemented by the output device. The measured value recording unit 201, the control value recording unit 202, the operational know-now recording unit 203, the accuracy standard recording unit 204, the response operation unknown data recording unit 205, the operation basis lacking data recording unit 206, and the event detection sensitivity recording unit 208 in FIG. 29 are implemented by the primary storage device or the secondary storage device.

The event determination unit 107 determines an event of the target time-series data according to the event detection sensitivity recorded in the event detection sensitivity recording unit 208. For example, in the case where the event detection sensitivity is 70 %, the event determination unit 107 determines that the events that are occurring in the both sections are the same when the matching degree of the feature amounts in the two sections of the target time-series data, and determines that events that are occurring in the both sections are different from each other when the matching degree is lower than 70 %.

Further, when determining events based on a pattern of extreme value attribute of the target time-series data, the event determination unit 107 determines that the events that are occurring in determination target sections are the same, when it is a pattern of extreme value attribute of the target time-series data under normal circumstances and when the matching degree of the pattern of the extreme value attribute in the determination target sections is lower than 70 %.

Further, when determining events based on a time interval of extreme value of the target time-series data, the event determination unit 107 determines that the events that are occurring in determination target sections are the same, when it is a pattern of the time interval of the extreme value of the target time-series data under normal circumstances and when the matching degree of the pattern of the time interval of the extreme value in the determination target sections is lower than 70 %.

In the above description, the operational know-how estimation device 1006 of the sixth embodiment is described as a configuration in which the event detection sensitivity recording unit 208 is added to the operational know-how estimation device 1004 of the fourth embodiment. However, the operational know-how estimation device 1006 of the sixth embodiment may have a configuration in which the event detection sensitivity recording unit 208 is added to a configuration in which the attribute estimation unit 106 is added to the operational know-how estimation device 1002 or 1003 of the second or third embodiment.

The operational know-how estimation device 1006 of the sixth embodiment includes the event detection sensitivity recording unit 208 that records the event detection sensitivity that defines the degree of matching of the feature amount in the time-series data of the measured values, which is the detection condition of the event occurrence period in the event determination unit 107. The event determination unit detects the event occurrence period based on the event detection sensitivity. Therefore, according to the operational know-how estimation device 1006 of the sixth embodiment, the number of types of events detected from the target time-series data becomes larger when compared to the understanding of the operator can be avoided regardless of the target time-series data.

The embodiments of the present invention can be combined, appropriately modified or omitted, without departing from the scope of the invention. While the invention has been described in detail, the foregoing description is in all aspects illustrative and not restrictive. It is understood that numerous other modifications not having been described can be devised without departing from the scope of the invention.

Explanation of Reference Signs

| | |
|---|---|
| 101 | data input/output unit |
| 102 | label estimation unit |
| 103 | know-how estimation unit |
| 104 | display control unit |
| 105 | display unit |
| 106 | attribute estimation unit |
| 107 | event determination unit |
| 108 | lacking information input unit |
| 109 | know-how re-estimation unit |
| 201 | measured value recording unit |
| 202 | control value recording unit |
| 203 | operational know-how recording unit |
| 204 | accuracy standard recording unit |
| 205 | response operation unknown data recording unit |
| 206 | operation basis lacking data recording unit |
| 207 | attribute attachment constraint recording unit |
| 208 | event detection sensitivity recording unit |
| 1001 to 1006 | operational know-how estimation device. |

**Claims**

1. An operational know-how estimation device comprising:

a data acquisition unit configured to acquire target time-series data being time-series data of measured values regarding a state of a water plant and control values regarding operation manipulation;

a classification information attachment unit configured to classify the target time-series data for each section by a clustering algorithm and attach classification information being a classification result to the sections of the target time-series data;

a know-how estimation unit configured to calculate a conditional probability that the measured values and the control values are simultaneously established for each classification information, and estimate operational know-how representing the control values to be set for the measured values based on the conditional probability; and

a display control unit configured to create display information that supports state understanding or operation manipulation of the water plant based on the operational know-how and cause a display unit to display the display information.

2. The operational know-how estimation device according to claim 1,
   wherein the classification information attachment unit is configured to perform pattern-classifying the target time-series data and attaches a result of the pattern-classifying to the target time-series data as the classification information.

3. The operational know-how estimation device according to claim 1,
   wherein the classification information attachment unit is configured to estimate a magnitude attribute representing understanding of an operator of the water plant with respect to a size of a value of the target time-series data by the classification, and attaches the magnitude attribute to a section of the target time-series data as the classification information.

4. The operational know-how estimation device

   according to any one of claims 1 to 3, further comprising
   an event determination unit configured to detect an event occurrence period used by the operator of the water plant to determine operation manipulation from the time-series data of the measured values, wherein
   the know-how estimation unit is configured to calculate a conditional probability that the measured values and the control values are simultaneously held for each piece of classification information with the event occurrence period and other periods being distinguished.

5. The operational know-how estimation device according to claim 4,
   wherein the event determination unit is configured to detect the event occurrence period based on a change pattern of an extreme value in the time-series data of the measured values.

6. The operational know-how estimation device according to claim 4,
   wherein the event determination unit is configured to detect the event occurrence period based on a time interval of an extreme value in the time-series data of the measured values.

7. The operational know-how estimation device

   according to any one of claims 4 to 6, further comprising:

an input unit configured to receive input from a user;
a know-how re-estimation unit configured to re-estimate the operational know-how, wherein
the know-how estimation unit is configured to determine that the time-series data of the measured values is response operation unknown data when the time-series data of the control values in the event occurrence period determined from the time-series data of the measured values does not exist,
the input unit is configured to receive the time-series data of the control values in the event occurrence period in the response operation unknown data as response operation data from the user, and
the know-how re-estimation unit is configured to re-estimate the operational know-how based on the response operation unknown data and the response operation data.

8. The operational know-how estimation device according to claim 7,
   wherein the know-how estimation unit is configured to determine that the time-series data of the measured values and the time-series data of the control values as operation basis lacking data when a mutual information amount between the time-series data of the measured values and the time-series data of the control values is equal to or less than a predetermined threshold value, the input unit is configured to receive attribute information regarding a period of the operation basis lacking data as operation basis data from the user, and the know-how re-estimation unit is configured to re-estimate the operational know-how based on the operation basis lacking data and the operation basis data.

9. The operational know-how estimation device according to claim 3,
   wherein the classification information attachment unit is configured to attach the attribute information to the section of the target time-series data according to an attribute attachment constraint which is a constraint regarding a section length of the target time-series data to which one piece of attribute information is attached.

10. The operational know-how estimation device

    according to any one of claims 4 to 7, further comprising

    an event detection sensitivity recording unit configured to record event detection sensitivity that defines a degree of matching of a feature amount in the time-series data of the measured values for detecting the event occurrence period in the event determination unit, and

the event determination unit is configured to detect the event occurrence period based on the event detection sensitivity.

11. An operational know-how estimation method comprising the steps of:

acquiring target time-series data being time-series data of measured values regarding a state of a water plant and control values regarding operation manipulation;

classifying the target time-series data for each section by a clustering algorithm;

attaching classification information being a classification result to the sections of the target time-series data;

calculating a conditional probability that the measured values and the control values are simultaneously held for each classification information;

estimating operational know-how representing the control values to be set for the measured values based on the conditional probability;

creating display information that supports state understanding or operation manipulation of the water plant based on the operational know-how; and causing a display unit to display the display information.

F I G. 1

1001

WATER SUPPLY AND SEWERAGE PLANT

```
                    ┌─────────────────────┐ ─101
                    │        DATA         │
                    │  INPUT/OUTPUT UNIT   │
                    └─────────────────────┘
```

┌─────────────────────┐ ─201          ┌─────────────────────┐ ─202
│   MEASURED VALUE     │               │   CONTROL VALUE      │
│   RECORDING UNIT     │               │   RECORDING UNIT     │
└─────────────────────┘               └─────────────────────┘

┌─────────────────────┐ ─102
│ LABEL ESTIMATION UNIT│
└─────────────────────┘

┌─────────────────────┐ ─103
│      KNOW-HOW        │
│   ESTIMATION UNIT    │
└─────────────────────┘

┌─────────────────────┐ ─203
│      KNOW-HOW        │
│   RECORDING UNIT     │
└─────────────────────┘

┌─────────────────────┐ ─104
│ DISPLAY CONTROL UNIT │
└─────────────────────┘

┌─────────────────────┐ ─105
│     DISPLAY UNIT     │
└─────────────────────┘

OPERATION MANIPULATION

OPERATOR

F I G. 4

| T | H | LABEL FOR H | Q | LABEL FOR Q |
|---|---|---|---|---|
| $t_1$ | $h_{t1}$ | | $q_{t1}$ | |
| $\vdots$ | $\vdots$ | $H_{L1}$ | $\vdots$ | $Q_{L1}$ |
| $t_2$ | $h_{t2}$ | | $q_{t2}$ | |
| $\vdots$ | $\vdots$ | $H_{L1}$ | $\vdots$ | $Q_{L1}$ |
| $t_3$ | $h_{t3}$ | | $q_{t3}$ | |
| $\vdots$ | $\vdots$ | $H_{L1}$ | $\vdots$ | $Q_{L1}$ |
| $t_4$ | $h_{t4}$ | | $q_{t4}$ | |
| $\vdots$ | $\vdots$ | $H_{L2}$ | $\vdots$ | $Q_{L2}$ |

F I G. 5

| EVENT X | EVENT Y | $n(X_i \times Y_j)$ | $p(Y|X)$ |
|---|---|---|---|
| $H_L=\{\ H_{L1},H_{L2},H_{L3},H_{L4},H_{L5}\ \}$ | $Q_L=\{\ Q_{L1},Q_{L2},Q_{L3},Q_{L4}\ \}$ | $n(H_{Li} \times Q_{Lj})$ | $p(Q_L|H_L)=n(H_{Li} \times Q_{Lj})/n(H_{Li})$ |
| $H_{L1}$ | $Q_{L1}$ | $n(H_{L1} \times Q_{L1})$ | $n(H_{L1} \times Q_{L1})/n(H_{L1})$ |
| $H_{L1}$ | $Q_{L2}$ | $n(H_{L1} \times Q_{L2})$ | $n(H_{L1} \times Q_{L2})/n(H_{L1})$ |
| $H_{L1}$ | $Q_{L3}$ | $n(H_{L1} \times Q_{L3})$ | $n(H_{L1} \times Q_{L3})/n(H_{L1})$ |
| $H_{L1}$ | $Q_{L4}$ | $n(H_{L1} \times Q_{L4})$ | $n(H_{L1} \times Q_{L4})/n(H_{L1})$ |
| $H_{L2}$ | $Q_{L1}$ | $n(H_{L2} \times Q_{L1})$ | $n(H_{L2} \times Q_{L1})/n(H_{L2})$ |
| $H_{L2}$ | $Q_{L2}$ | $n(H_{L2} \times Q_{L2})$ | $n(H_{L2} \times Q_{L2})/n(H_{L2})$ |
| $\vdots$ | $\vdots$ | $\vdots$ | $\vdots$ |
| $H_{L5}$ | $Q_{L4}$ | $n(H_{L5} \times Q_{L4})$ | $n(H_{L5} \times Q_{L4})/n(H_{L5})$ |

EP 4 064 171 A1

OPERATION GUIDANCE SCREEN:WATER SUPPLY QUANTITY Q

EP 4 064 171 A1

# F I G. 7

EP 4 064 171 A1

ABNORMALITY SIGN MONITORING SCREEN:WATER SUPPLY QUANTITY Q

WATER SUPPLY PATTERN
UNDER NORMAL
CIRCUMSTANCES

CURRENT WATER
SUPPLY PATTERN:
ABNORMALITY SIGN

$H_{L1}$ $H_{L1}$ $H_{L1}$ $H_{L2}$

$Q_{L1}$ $Q_{L1}$ $Q_{L1}$ $Q_{L2}$

F I G. 8

1002

WATER SUPPLY AND SEWERAGE PLANT

DATA
INPUT/OUTPUT UNIT ——101

MEASURED VALUE
RECORDING UNIT ——201

CONTROL VALUE
RECORDING UNIT ——202

ATTRIBUTE
ESTIMATION UNIT ——106

KNOW-HOW
ESTIMATION UNIT ——103

KNOW-HOW
RECORDING UNIT ——203

DISPLAY CONTROL UNIT ——104

DISPLAY UNIT ——105

OPERATION
MANIPULATION

OPERATOR

FIG. 9

| ATTRIBUTE | TIME-SERIES DATA | EXTREME VALUE DISTRIBUTION |
|---|---|---|

400b — 400a — 400c

●:MAXIMUM VALUE —401a   ○:MINIMUM VALUE —401b

UPPER LIMIT ABNORMALITY
EXTREME HIGH
HIGH
NORMAL
LOW
LOWER LIMIT ABNORMALITY

402b
403b
403a
402a

EP 4 064 171 A1

F I G. 1 0

F I G.  1 1

| EVENT X | EVENT Y | $n(X_i \times Y_j)$ | $p(Y|X)$ |
|---|---|---|---|
| $H_A = \{H_{A1} = LOW, H_{A2} = HIGH\}$ | $Q_A = \{Q_{A1} = LOW, Q_{A2} = HIGH\}$ | $n(H_{Ai} \times Q_{Aj})$ | $p(Q_A|H_A) = n(H_{Ai} \times Q_{Aj})/n(H_{Ai})$ |
| $H_{A1} = LOW$ | $Q_{A1} = LOW$ | $n(H_{A1} \times Q_{A1}) = 1$ | $n(H_{A1} \times Q_{A1})/n(H_{A1}) = 1/12$ |
| $H_{A1} = LOW$ | $Q_{A2} = HIGH$ | $n(H_{A1} \times Q_{A2}) = 11$ | $n(H_{A1} \times Q_{A2})/n(H_{A1}) = 11/12$ |
| $H_{A2} = HIGH$ | $Q_{A1} = LOW$ | $n(H_{A2} \times Q_{A1}) = 10$ | $n(H_{A2} \times Q_{A1})/n(H_{A2}) = 10/11$ |
| $H_{A2} = HIGH$ | $Q_{A2} = HIGH$ | $n(H_{A2} \times Q_{A2}) = 1$ | $n(H_{A2} \times Q_{A2})/n(H_{A2}) = 1/11$ |

EP 4 064 171 A1

OPERATION GUIDANCE SCREEN:WATER SUPPLY QUANTITY Q

EP 4 064 171 A1

FIG. 13

ABNORMALITY SIGN MONITORING SCREEN:WATER SUPPLY QUANTITY Q

EP 4 064 171 A1

F I G. 1 4

EDUCATIONAL SUPPORT INFORMATION DISPLAY SCREEN:WATER SUPPLY QUANTITY Q

~1300

~1301

EP 4 064 171 A1

F I G. 1 5

# F I G. 16

| EVENT X | EVENT Y | $n(X_i \times Y_j)$ | $p(Y|X)$ |
|---|---|---|---|
| $H_A = \{H_{A1}(\text{LOW}), H_{A2}(\text{MEDIUM}), H_{A3}(\text{HIGH})\}$ | $Q_A = \{Q_{A1}(\text{LOW}), Q_{A2}(\text{HIGH})\}$ | $n(H_{Ai} \times Q_{Aj})$ | $p(Q_A|H_A) = n(H_{Ai} \times Q_{Aj})/n(H_{Ai})$ |
| $H_{A1}(\text{LOW})$ | $Q_{A1}(\text{LOW})$ | $n(H_{A1} \times Q_{A1}) = 3$ | $n(H_{A1} \times Q_{A1})/n(H_{A1}) = 3/14$ |
| $H_{A1}(\text{LOW})$ | $Q_{A2}(\text{HIGH})$ | $n(H_{A1} \times Q_{A2}) = 11$ | $n(H_{A1} \times Q_{A2})/n(H_{A1}) = 11/14$ |
| $H_{A2}(\text{MEDIUM})$ | $Q_{A1}(\text{LOW})$ | $n(H_{A2} \times Q_{A1}) = 9$ | $n(H_{A2} \times Q_{A1})/n(H_{A2}) = 9/17$ |
| $H_{A2}(\text{MEDIUM})$ | $Q_{A2}(\text{HIGH})$ | $n(H_{A2} \times Q_{A2}) = 8$ | $n(H_{A2} \times Q_{A2})/n(H_{A2}) = 8/17$ |
| $H_{A3}(\text{HIGH})$ | $Q_{A1}(\text{LOW})$ | $n(H_{A3} \times Q_{A1}) = 10$ | $n(H_{A3} \times Q_{A1})/n(H_{A3}) = 10/14$ |
| $H_{A3}(\text{HIGH})$ | $Q_{A2}(\text{HIGH})$ | $n(H_{A3} \times Q_{A2}) = 4$ | $n(H_{A3} \times Q_{A2})/n(H_{A3}) = 4/14$ |

EP 4 064 171 A1

F I G. 1 7

1003

WATER SUPPLY AND SEWERAGE PLANT

┌─────────────────────┐ ─101
│        DATA         │
│  INPUT/OUTPUT UNIT  │
└─────────────────────┘

┌─────────────────────┐ ─201       ┌─────────────────────┐ ─202
│   MEASURED VALUE    │            │    CONTROL VALUE    │
│   RECORDING UNIT    │            │   RECORDING UNIT    │
└─────────────────────┘            └─────────────────────┘

┌─────────────────────┐ ─106
│      ATTRIBUTE       │
│   ESTIMATION UNIT   │
└─────────────────────┘

┌─────────────────────┐ ─107
│        EVENT        │
│ DETERMINATION UNIT  │
└─────────────────────┘

┌─────────────────────┐ ─103
│      KNOW-HOW       │
│   ESTIMATION UNIT   │
└─────────────────────┘

┌─────────────────────┐ ─203
│      KNOW-HOW       │
│   RECORDING UNIT    │
└─────────────────────┘

┌─────────────────────┐ ─104
│ DISPLAY CONTROL UNIT │
└─────────────────────┘

┌─────────────────────┐ ─105
│     DISPLAY UNIT     │
└─────────────────────┘

OPERATION
MANIPULATION

OPERATOR

33

# F I G . 1 8

F I G .  1 9

| EVENT X | | EVENT Y | $n(X_i \times Y_j)$ | $p(Y|X)$ |
|---|---|---|---|---|
| $E_A = \{E_{A1}(\text{NORMAL}),$ $E_{A2}(\text{CONSTRUCTION})\}$ | $H_A = \{H_{A1}(\text{LOW}), H_{A2}(\text{MEDIUM}),$ $H_{A3}(\text{HIGH})\}$ | $Q_A = \{Q_{A1}(\text{LOW}),$ $Q_{A2}(\text{HIGH})\}$ | $n(E_{Ak} \times H_{Ai} \times Q_{Aj})$ | $p(Q_A | H_A, E_A)$ $= n(E_{Ak} \times H_{Ai} \times Q_{Aj})/n(H_{Ai} \times E_{Ak})$ |
| $E_{A1}(\text{NORMAL})$ | $H_{A1}(\text{LOW})$ | $Q_{A1}(\text{LOW})$ | $n(E_{A1} \times H_{A1} \times Q_{A1})=3$ | $n(E_{A1} \times H_{A1} \times Q_{A1})/n(E_{A1} \times H_{A1})=3/14$ |
| $E_{A1}(\text{NORMAL})$ | $H_{A1}(\text{LOW})$ | $Q_{A2}(\text{HIGH})$ | $n(E_{A1} \times H_{A1} \times Q_{A2})=11$ | $n(E_{A1} \times H_{A1} \times Q_{A2})/n(E_{A1} \times H_{A1})=11/14$ |
| $E_{A1}(\text{NORMAL})$ | $H_{A2}(\text{MEDIUM})$ | $Q_{A1}(\text{LOW})$ | $n(E_{A1} \times H_{A2} \times Q_{A1})=9$ | $n(E_{A1} \times H_{A2} \times Q_{A1})/n(E_{A1} \times H_{A2})=9/10$ |
| $E_{A1}(\text{NORMAL})$ | $H_{A2}(\text{MEDIUM})$ | $Q_{A2}(\text{HIGH})$ | $n(E_{A1} \times H_{A2} \times Q_{A2})=1$ | $n(E_{A1} \times H_{A2} \times Q_{A2})/n(E_{A1} \times H_{A2})=1/10$ |
| $E_{A1}(\text{NORMAL})$ | $H_{A3}(\text{HIGH})$ | $Q_{A1}(\text{LOW})$ | $n(E_{A1} \times H_{A3} \times Q_{A1})=0$ | — |
| $E_{A1}(\text{NORMAL})$ | $H_{A3}(\text{HIGH})$ | $Q_{A2}(\text{HIGH})$ | $n(E_{A1} \times H_{A3} \times Q_{A2})=0$ | — |
| $E_{A2}(\text{CONSTRUCTION})$ | $H_{A1}(\text{LOW})$ | $Q_{A1}(\text{LOW})$ | $n(E_{A2} \times H_{A1} \times Q_{A1})=0$ | — |
| $E_{A2}(\text{CONSTRUCTION})$ | $H_{A1}(\text{LOW})$ | $Q_{A2}(\text{HIGH})$ | $n(E_{A2} \times H_{A1} \times Q_{A2})=0$ | — |
| $E_{A2}(\text{CONSTRUCTION})$ | $H_{A2}(\text{MEDIUM})$ | $Q_{A1}(\text{LOW})$ | $n(E_{A2} \times H_{A2} \times Q_{A1})=0$ | $n(E_{A2} \times H_{A2} \times Q_{A1})/n(E_{A2} \times H_{A2})=0/8$ |
| $E_{A2}(\text{CONSTRUCTION})$ | $H_{A2}(\text{MEDIUM})$ | $Q_{A2}(\text{HIGH})$ | $n(E_{A2} \times H_{A2} \times Q_{A2})=8$ | $n(E_{A2} \times H_{A2} \times Q_{A2})/n(E_{A2} \times H_{A2})=8/8$ |
| $E_{A2}(\text{CONSTRUCTION})$ | $H_{A3}(\text{HIGH})$ | $Q_{A1}(\text{LOW})$ | $n(E_{A2} \times H_{A3} \times Q_{A1})=10$ | $n(E_{A2} \times H_{A3} \times Q_{A1})/n(E_{A2} \times H_{A3})=10/14$ |
| $E_{A2}(\text{CONSTRUCTION})$ | $H_{A3}(\text{HIGH})$ | $Q_{A2}(\text{HIGH})$ | $n(E_{A2} \times H_{A3} \times Q_{A2})=4$ | $n(E_{A2} \times H_{A3} \times Q_{A2})/n(E_{A2} \times H_{A3})=4/14$ |

EP 4 064 171 A1

F I G. 2 0

1004

WATER SUPPLY AND SEWERAGE PLANT

101 — DATA INPUT/OUTPUT UNIT

201 — MEASURED VALUE RECORDING UNIT

202 — CONTROL VALUE RECORDING UNIT

204 — ACCURACY STANDARD RECORDING UNIT

106 — ATTRIBUTE ESTIMATION UNIT

107 — EVENT DETERMINATION UNIT

103 — KNOW-HOW ESTIMATION UNIT

OPERATION MANIPULATION

205 — RESPONSE OPERATION UNKNOWN DATA RECORDING UNIT

206 — OPERATION BASIS LACKING DATA RECORDING UNIT

203 — KNOW-HOW RECORDING UNIT

104 — DISPLAY CONTROL UNIT

105 — DISPLAY UNIT

108 — LACKING INFORMATION INPUT UNIT

109 — KNOW-HOW RE-ESTIMATION UNIT

OPERATOR

F I G . 2 1

$$I(Q_A;H_A) \geqq I_{TH}$$

F I G . 2 2

$$I(Q_A;H_A) < I_{TH}$$

F I G.  2 3

F I G.  2 4

FIG. 25

FIG. 26

F I G.  2 7

1005

WATER SUPPLY AND SEWERAGE PLANT

DATA INPUT/OUTPUT UNIT ~101

MEASURED VALUE RECORDING UNIT ~201

CONTROL VALUE RECORDING UNIT ~202

ACCURACY STANDARD RECORDING UNIT ~204

ATTRIBUTE ATTACHMENT CONSTRAINT RECORDING UNIT ~207

ATTRIBUTE ESTIMATION UNIT ~106

EVENT DETERMINATION UNIT ~107

KNOW-HOW ESTIMATION UNIT ~103

KNOW-HOW RECORDING UNIT ~203

RESPONSE OPERATION UNKNOWN DATA RECORDING UNIT ~205

OPERATION BASIS LACKING DATA RECORDING UNIT ~206

DISPLAY CONTROL UNIT ~104

DISPLAY UNIT ~105

LACKING INFORMATION INPUT UNIT ~108

KNOW-HOW RE-ESTIMATION UNIT ~109

OPERATION MANIPULATION

OPERATOR

EP 4 064 171 A1

1006
WATER SUPPLY AND SEWERAGE PLANT

101
DATA
INPUT/OUTPUT UNIT

201
MEASURED VALUE
RECORDING UNIT

202
CONTROL VALUE
RECORDING UNIT

204
ACCURACY STANDARD
RECORDING UNIT

208
EVENT DETECTION SENSITIVITY
RECORDING UNIT

106
ATTRIBUTE ESTIMATION UNIT

107
EVENT DETERMINATION UNIT

103
KNOW-HOW ESTIMATION UNIT

OPERATION
MANIPULATION

205
RESPONSE OPERATION UNKNOWN
DATA RECORDING UNIT

206
OPERATION BASIS LACKING
DATA RECORDING UNIT

203
KNOW-HOW
RECORDING UNIT

104
DISPLAY CONTROL UNIT

108
LACKING INFORMATION INPUT UNIT

105
DISPLAY UNIT

109
KNOW-HOW RE-ESTIMATION UNIT

OPERATOR

EP 4 064 171 A1

## INTERNATIONAL SEARCH REPORT

| International application No. |
| --- |
| PCT/JP2019/045449 |

### A. CLASSIFICATION OF SUBJECT MATTER
Int. Cl. G06Q50/06(2012.01)i
FI: G06Q50/06

According to International Patent Classification (IPC) or to both national classification and IPC

### B. FIELDS SEARCHED

Minimum documentation searched (classification system followed by classification symbols)
Int. Cl. G06Q50/06

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)
JSTPlus (JDreamIII)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2018-63656 A (HITACHI, LTD.) 19 April 2018, paragraphs [0001]-[0104] | 1-11 |
| Y | JP 2013-175108 A (MITSUBISHI ELECTRIC CORP.) 05 September 2013, abstract, paragraphs [0001]-[0070] | 1-11 |
| Y | 笠井武郎ほか 3 名, "「ふれっしゅ水道」と知的制御システム", 日立評論, 25 December 1991, Vol. 73, No. 12, pp. 5-10, in particular, p. 9, fig. 9 (KASAI, Takeo et al., "Intelligent Control Technology for New Water Systems". Hitachi Hyoron.) | 2-10 |
| Y | JP 2001-55763 A (TOSHIBA CORP.) 27 February 2001, abstract, paragraphs [0001]-[0243] | 2-10 |

☒ Further documents are listed in the continuation of Box C.   ☒ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 29.01.2020 | 10.02.2020 |

| Name and mailing address of the ISA/<br>  Japan Patent Office<br>  3-4-3, Kasumigaseki, Chiyoda-ku,<br>  Tokyo 100-8915, Japan | Authorized officer<br><br>Telephone No. |

Form PCT/ISA/210 (second sheet) (January 2015)

**INTERNATIONAL SEARCH REPORT**

| International application No. |
| --- |
| PCT/JP2019/045449 |

C (Continuation).    DOCUMENTS CONSIDERED TO BE RELEVANT

| Category* | Citation of document, with indication, where appropriate, of the relevant passages | Relevant to claim No. |
| --- | --- | --- |
| A | JP 2011-60135 A (TOSHIBA CORP.) 24 March 2011, entire text | 1-11 |
| A | JP 2011-129046 A (TOSHIBA CORP.) 24 March 2011, entire text | 1-11 |

Form PCT/ISA/210 (continuation of second sheet) (January 2015)

INTERNATIONAL SEARCH REPORT

Information on patent family members

International application No.

PCT/JP2019/045449

| Patent Documents referred to in the Report | Publication Date | Patent Family | Publication Date |
|---|---|---|---|
| JP 2018-63656 A | 19.04.2018 | (Family: none) | |
| JP 2013-175108 A | 05.09.2013 | (Family: none) | |
| JP 2001-55763 A | 27.02.2001 | (Family: none) | |
| JP 2011-60135 A | 24.03.2011 | (Family: none) | |
| JP 2011-129046 A | 24.03.2011 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004 A
- JP 38412 A